# EUROPEAN PATENT SPECIFICATION

(11) **EP 0 763 822 B1**
(45) Date of publication and mention of the grant of the patent: **07.04.2004**
(21) Application number: 96117575.9
(22) Date of filing: 19.10.1993
(51) Int. Cl.: G11B 17/22, G11B 33/08

(54) **A floating mechanism for a recording and playback unit**
Schwebender Mechanismus für Aufzeichnungs- und Wiedergabevorrichtung
Mécanisme flottant pour unité d'enregistrement et de reproduction

(30) Priority: 19.10.1992 JP 28005292; 09.12.1992 JP 32968892; 09.12.1992 JP 32969492; 09.12.1992 JP 32967892; 09.12.1992 JP 32969092
(43) Date of publication of application: 19.03.1997
(62) Divisional of application: 93116855.3
(73) Proprietor: CLARION Co., Ltd., Tokyo (JP)
(72) Inventor: Handa, Hiroto, Bunkyo-ku, Tokyo (JP); Muramata, Hidenori, Bunkyo-ku, Tokyo (JP); Kanno, Satosi, Bunkyo-ku, Tokyo (JP)
(74) Representative: Schuhmann, Albrecht

(56) References cited:
- EP-A- 0 206 831
- EP-A- 0 305 035
- US-A- 4 841 499

## Description

### BACKGROUND OF THE INVENTION

This invention relates to a recording and playback unit for recording information on a recording medium and for reproducing information recorded on the recording medium, and more particularly relates to a recording and playback unit which is constructed in such a way that several recording media can be efficiently accommodated in a small space and which has conveying mechanisms which reliably convey the recording media to the part of the unit where recording and playback are performed.

The Compact Disc (hereinafter referred to as the 'CD') is a widely known recording medium on which information is prerecorded. Recently, 'CD autochanger' systems for cars, in which a CD player unit provided with a magazine device which can be loaded with several CDs is installed in the trunk of a car, and a main unit, called the 'head unit', is positioned near the driver's seat, have been becoming popular. With this kind of system the driver can, using the main unit, select any of the CDs loaded in the magazine device in the player unit in the trunk of the car, and can have the player unit replay the information recorded on the CD, for example, music, without leaving the driver's seat.

Another recording medium that has been developed in recent years is the Mini Disc cartridge (hereinafter referred to as the 'MD'), which consists of an optical disc or a magneto-optical disc contained in a protective cartridge case. With the MD it is possible not only to replay prerecorded information but also to newly record information and to erase and record over information already recorded.

Document EP-A-0 305 035 discloses a vibration-resistant multiple-disc player in which a disc holder housing discs held on trays is loaded. A playback means is supported on a support member through a vibration-resistant mechanism. The device shows a carriage with projecting pins, which are guided in guide grooves and cam grooves of a pair of plates. Cam grooves and guide slots for receiving pins are shown also in EP-A-0 206 831.

Among others, the following features are sought in recording and playback units which are loaded with and carry out information recording and playback operations on these recording media: the recording media must be reliably conveyed to the player part of the unit; and the unit should be constructed in such a way that the space inside the unit is used efficiently, so that as many of the recording media as possible can be stocked in the unit at once.

The object of the present invention is to provide a recording and playback unit in which the recording media are reliably conveyed to the player part of the unit and which is constructed in such a way that the space inside the device is used efficiently so that as many of the recording media as possible can be stocked in the device at once.

According to the present invention there is provided a floating mechanism for a disc device, which comprises: a device which is to be put into a floating state, and which includes disc recording/playback means; a plurality of projecting members, which project from the device; side plates provided with guide slots for guiding the device up and down in a straight line, the projecting members projecting into the guide slots (the guide slots being provided with first large diameter holes located where the projecting members are to be when said device is put into the floating state); elevator plates, provided with stepped cams which move the device up and down when caused to do so by the movement of the elevator plates, the projecting members projecting into the stepped cams (the stepped cams being provided with second large diameter holes which when caused to do so by the movement of the elevator plates become substantially aligned with the first large diameter holes, respectively); and sub guide plates, each mounted adjacent to at least one of the plates mentioned above (the sub guide plates being provided with supplementary guide slots which serve in place of the parts of the guide slots that are rendered missing by the presence of the first large diameter guide holes, the projecting portions projecting into the supplementary guide slots, and the sub guide plates being provided with third large diameter holes, one third large diameter hole being formed at one end of each of the supplementary guide slots); wherein the floating state of the device is secured by the rough alignment of the first, second, and third large diameter guide holes.

This floating mechanism, in which the projecting members are provided at both ends with large diameter end portions having, according to a preferred embodiment of the invention, tapered side surfaces, for preventing the projecting members from leaving the guide slots and the stepped cams and the supplementary guide slots. The large diameter end portions are, according to an advantageous modification of the invention of larger diameter than the first, second, and third large diameter holes.

The floating mechanism further comprising, according to a preferred embodiment of the invention, moving means for moving the sub guide plates, wherein the third large diameter holes are aligned with the first and second large diameter holes by the moving means.

The floating mechanism, in which the device to be put into a floating state includes, according to an embodiment of the invention, a disc holder containing a disc and also is provided with linking means for linking the disc holder to the means for disc recording/playback.

### BRIEF DESCRIPTION OF THE DRAWINGS

FIG. 1 is a plan view illustrating the construction of a typical MD;
FIG. 2 is a block diagram of an MD autochanger unit, constructed in accordance with a preferred embodiment of the present invention, for installation in a car;
FIG. 3 is a cross-sectional side elevation view of an autochanger unit constructed in accordance with the preferred embodiment of FIG. 2, and illustrates the positions of the main internal parts of the autochanger unit during disc insertion;
FIG. 4 is a plan view of the front panel of the car autochanger unit of FIG.3;
FIG. 5 is a plan view illustrating the construction of the carrier shown in FIG.3;
FIG. 6 is a side elevation view of the carrier;
FIG. 7 is a plan view of a disc pull-in mechanism and a disc eject mechanism used in the stocker shown in FIG. 3, and illustrates the state of a stocker disc compartment during disc insertion and ejection;
FIG. 8 is a plan view of the disc pull-in and eject mechanisms of FIG. 7, and illustrates the state of a stocker disc compartment with a disc fully loaded into it;
FIG. 9 is a plan view of a carrier and stocker elevator mechanism used in the autochanger unit of FIG. 3, and illustrates the state of the mechanism when the carrier is in its uppermost position and the stocker is in its lower position;
FIG. 10 is a plan view illustrating the state of the carrier and stocker mechanism when the carrier is in its lowest position and the stocker is in its upper position;
FIG. 11 comprises two plan views of a cam gear used in the carrier and stocker elevator mechanism; FIG .11(A) shows the upper surface cam groove 6b, and FIG. 11(B) shows the underside cam groove 6c;
FIG. 12 is a side elevation view of the carrier and stocker elevator mechanism, and illustrates the elevator plate 12L fitted to the side plate 1L;
FIG. 13 is a side elevation view of the carrier and stocker elevator mechanism, and illustrates the elevator plate 12R fitted to the side plate 1R;
FIG. 14 is a plan view of the carrier and stocker elevator mechanism, and illustrates the carrier and the stocker mounted on the elevator plates;
FIG. 15 is a cross-sectional side elevation view of the autochanger unit, and illustrates the positions of the main internal parts of the autochanger unit as a disc is loaded onto the carrier;
FIG. 16 is a cross-sectional side elevation view of the autochanger unit, and illustrates the positions of the main internal parts of the autochanger unit when the carrier is positioned on the player;
FIG. 17 is a plan view of a player floating mechanism, and illustrates the floating mechanism in the locked state;
FIG. 18 is a plan view illustrating the player floating mechanism in the lock-released state;
FIG. 19 is a plan view of a linking mechanism whose main part is a chucking plate 25L;
FIG. 20 is a right side elevation view of the linking mechanism of FIG. 19;
FIG. 21 is a right side elevation view of a linking mechanism whose main part is a chucking plate 25R;
FIG. 22 is a side elevation view of an elevator mechanism for raising and lowering a sub guide plate 22L, and illustrates this elevator mechanism in its upper position;
FIG. 23 is a side elevation view illustrating the sub guide plate 22L elevator mechanism in its lower position;
FIG. 24 is a side elevation view of an elevator mechanism for raising and lowering a sub guide plate 22R, and illustrates this elevator mechanism in its upper position; FIG. 25 is a side elevation view illustrating the sub guide plate 22R elevator mechanism in its lower position;
FIG. 26 is a cross-sectional side elevation view of the autochanger unit, and illustrates the positions of the main internal parts of the autochanger unit as a disc is loaded into the stocker; and
FIG. 27 is a cross-sectional side elevation view of the autochanger unit, and illustrates the positions of the main internal parts of the autochanger unit when the player is floating.

### DESCRIPTION OF THE PREFERRED EMBODIMENT

An MD autochanger unit for installation in a car (hereinafter referred to simply as 'the MD unit') will now be described, with reference to the accompanying drawings, as a preferred embodiment of a recording and playback unit according to the present invention.

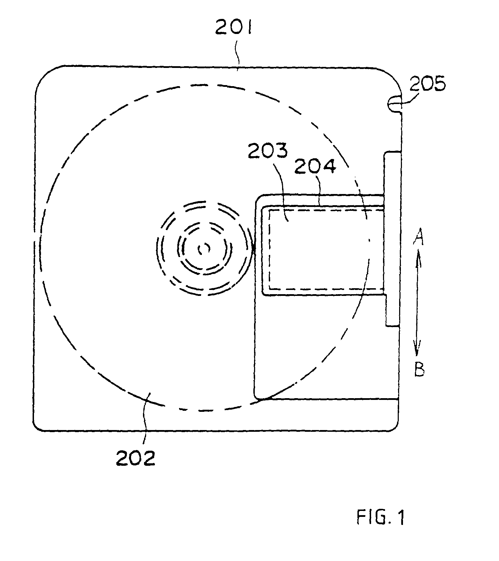

This MD unit is an MD player which performs information playback operations or information recording operations on MDs loaded into it. First, a typical MD of the kind used by the MD unit will be described. FIG. 1 is a plan view showing the construction of a typical MD wherein; reference numeral 201 denotes a cartridge case for housing the disc, and reference numeral 202 denotes a 6 cm diameter optical or magneto-optical disc for information recording, contained in the cartridge case 201. An access window 203 is provided in the cartridge case 201, and the disc 202 is accessed through this window for information playback or recording, reference numeral 204 denotes a slide shutter which is mounted on the cartridge case 201 in such a way that it opens and closes the access window 203 by sliding in the directions indicated by the arrows A and B in FIG. 1, and reference numeral 205 denotes an engaging notch which comes into use when the MD is loaded into certain holding positions inside the MD unit. Because the slide shutter 204 is closed at all times other than when the disc is being accessed, the disc 202 is protected from the outside thereby making the MD a very practical and durable medium.

There are two different types of MD: the pre-mastered (pre-m) read-only type, which has information prerecorded on it and is for playback of this information only; and the recordable type, which can be written on. The pre-mastered type has an access window, to allow access by a laser pickup which will be discussed later, only on the side of the cartridge case that faces the turntable onto which the disc is loaded for playing, and this access window is opened and closed by the slide shutter 204. The recordable type, on the other hand, has a window not just on the turntable side but also on its other side, and a magnetic head for information recording accesses and abuts with the disc 202 through this other window. Both these windows are opened and closed by the shutter 204.

In the description that follows, except where they are named explicitly, both the cartridge case 201 and the disc itself 202 will be referred to as 'the disc'. It should also be noted that although the preferred embodiment below is described with reference only to the pre-mastered type of disc, it is applicable to the recordable type of disc as well.

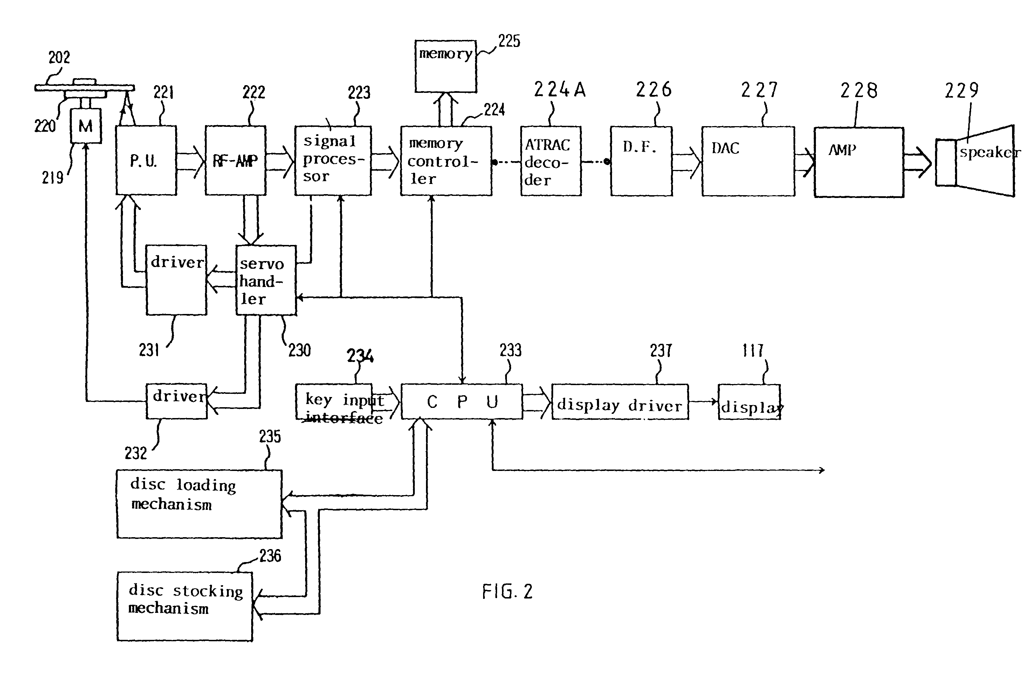

The control sections and the signal processing sections of the MD unit will now be described, with reference to FIG. 2.

In FIG. 2, reference numeral 219 denotes a spindle motor for rotating the disc, reference numeral 220 denotes a turntable for supporting the disc on the motor, and reference numeral 221 designates a pickup which applies light onto the disc and reads information recorded on the disc by picking up the reflected light.

A display 117 is an LCD display which is so constructed as to display characters long, and can display letters, symbols and numerals in 15 figures at the maximum, for example.

An RF amplifier 222 amplifies the high frequency signal outputted by the pickup 221, and a signal processor 223 carries out prescribed signal processing on the signal outputted by the RF amplifier. A memory controller 224 writes data received from the signal processor 223 into a memory 225, and also reads data from the memory 225. A compressed signal expanding means (an ATRAC decoder) 224A expands the signal that has been read from the disc, according to a prescribed sequence. A digital filter 226 makes various acoustic corrections, a D/A converter 227 converts the sound data from a digital signal into an analog signal, an audio amplifier 228 amplifies this analog sound signal, and a speaker 229 makes sounds according to this sound signal.

A servo handler 230 receives the readout synchronization signal component from the RF amplifier, and other signals, and generates drive control signals. A driver 231 generates drive signals for driving a laser light generator, a tracking actuator, and a focus actuator (none of which are shown in FIG.2), mounted inside the pickup 221, according to drive control signals it receives from the servo handler 230. A driver 232 generates drive signals for driving mechanical drive mechanisms such as the spindle motor 219 according to drive signals it receives from the servo handler 230.

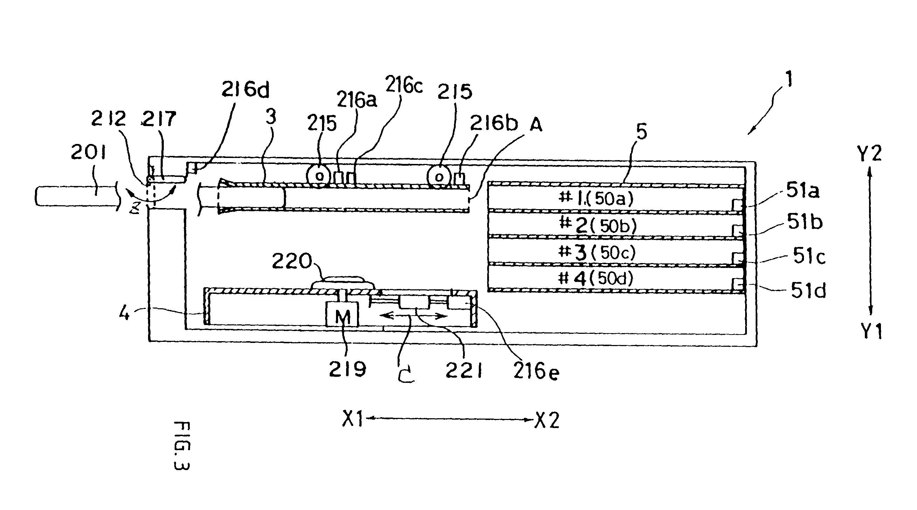

Reference numeral 233 denotes a CPU, which serves as a control means for controlling the unit and for communicating with the head unit (not shown). A key input interface 234 receives input from keys mounted in the front panel, shown in FIG.3, and supplies this input data to the CPU 233. A disc loading mechanism 235, controlled by the CPU 233, controls the movement of the disc carrier, which is made up of various sensors and actuators and will be further described hereinafter. A disc stocking mechanism 236, also controlled by the CPU 233, controls the movement of a stocker 5, which is made up of stocking completion sensors and actuators and the like and also will be further described hereinafter. A display driver 237 drives the display 117 based on display data outputted by the CPU 233. It is noted here that although in this preferred embodiment the invention is applied to a playback-only system, if a magnetic head was provided, the system would of course be capable of recording on the discs, too.

The operation of the MD unit will now be explained. In the drawings, the arrows X1 and X2 indicate the front-rear direction in the MD unit, and the arrows Y1 and Y2 indicate the up-down direction in the MD unit. Accordingly, the side toward which the arrows X1 point will be called the front side, the side toward which the arrows X2 point will be called the rear side, the side toward which the arrows Y1 point will be called the lower side, and the side toward which the arrows Y2 point will be called the upper side.

FIG. 3 is a cross-sectional view of the MD unit, and shows the positions of the internals of the MD unit during disc insertion. The MD unit consists of a number of main parts, which will be described below, mounted inside a cuboid case 1. A loading slot 212 for loading discs is formed in the front of the case 1 near the top of the case 1, and a door 217 for preventing extraneous matter from getting inside the MD unit is mounted in the loading slot 212 in such a way that it is free to pivot in the direction indicated by the arrow Z so that it opens and closes the loading slot 212.

The main parts of the MD unit, mounted inside the case 1, are: a carrier 3, which loads itself with either a disc inserted through the loading slot 212 or a disc from the stocker 5, holds the disc, and then either loads the disc into the stocker 5 or ejects the disc through the loading slot 212; a player 4, which rotates a disc held in the carrier 3; and a stocker 5, which holds discs.

The carrier 3 is positioned behind the loading slot 212 and is mounted on an elevator mechanism, not shown in FIG.3, by which it can be moved up and down inside the case 1; a pair of rollers 215, which will be discussed hereinafter, for moving the disc in the X1-X2 direction, in order to load a disc inserted through the loading slot onto the carrier or in order to load a disc from the carrier into the stocker 5 or in order to eject a disc from the carrier out through the loading slot 212, are rotatably mounted on the top part of the carrier 3.

Various sensors, for detecting the position of the disc on insertion, while loaded on the carrier, and on ejection, are also mounted on the carrier 3. These sensors include: a disc insertion sensor 216a, which detects that a disc has been inserted; a loading completion sensor 216b, which detects that a disc is fully loaded onto the carrier; an ejection sensor 216c, which detects that a disc has been ejected; and a disc removal sensor 216d, which detects that the disc has been removed from the MD unit.

The loading completion sensor 216b detects that a disc is fully loaded onto the carrier 3 by sensing that the end of a disc which has been inserted through the loading slot 212 and has been loaded onto the carrier 3 by the roller 215 has reached the position A in FIG.3, i.e. the end of the carrier 3. The eject sensor 216c detects that a disc has been ejected from the carrier 3 as far as a position from which it can be taken out of the unit; this position will be called the reload position. The disc removal sensor 216d is mounted near the loading slot 212 and detects that a disc which has been ejected from the carrier 3 to the loading slot 212, i.e. a disc which has been moved into the reload position, has been removed from the MD unit.

The player 4 is positioned underneath the carrier 3 and facing the carrier 3, and the player 4 is mounted on dampers and anti-vibration springs in such a way that when the disc is being rotated the player 4 is in a state in which it is floating on these dampers and anti-vibration springs so that any vibrations originating outside the unit that the case 1 might undergo are prevented from being transmitted to the player 4. At all times other than when a disc is being rotated on it, the player 4 is immovably fixed to the case 1; this will be further discussed hereinafter.

The rotary drive spindle motor 219, the turntable 220 on which the disc is placed, and the pickup 221 which shines a beam of light onto the disc and reads information from the disc, which were mentioned above with reference to FIG.2, are mounted on the player 4, and the pickup 221 is mounted in such a way that it can slide radially with respect to a disc placed on the turntable 220, i.e. in the direction indicated by the arrow C in FIG.3. Also mounted on the player 4 is a disc placement completion sensor 216e, which is a recording medium detector means which by sensing the presence of the cartridge case 201 detects that a disc is in place on the turntable 220.

The stocker 5 is a case made up of several disc holding compartments arranged in a vertical stack, and in this preferred embodiment the stocker 5 has four disc compartments, 50a-50d; it is positioned behind the carrier 30, as seen from the loading slot 212, and is mounted in such a way that it can move up and down. The compartments 50a-50d are identified by numbers #1-#4, with compartment 50a being #1, compartment 50b being #2, compartment 50c being #3, and compartment 50d being #4.

Each of the compartments 50a-50d has an opening at the front through which a disc can be inserted, and behind the opening is a space in which a disc can be accommodated horizontally. Each of the compartments is also provided with a stocking completion sensor 51a-51d, which detects that a disc has been inserted all the way into the respective compartment, and a pull-in mechanism and an eject mechanism, not shown in FIG.3, which respectively are for pulling discs into the compartment and ejecting discs from the compartment. A front panel provided with input functions, for inputting instructions from the user into the unit, and information display functions, is mounted on the front of the case 1.

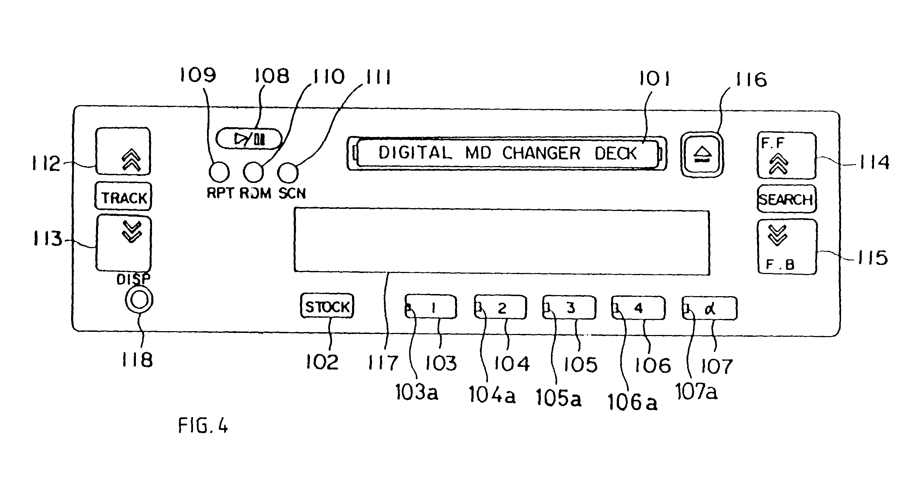

FIG. 4 is a plan view of this front panel. In FIG. 4, reference numeral 102 denotes a stock key which inputs into the unit a stocking instruction telling the unit to stock a disc that has been inserted through the loading slot 212 into the stocker 5. Keys 103 through 106 are MD designation keys (hereinafter called No. keys) for selecting a desired disc out of four discs held in the stocker compartments 50a-50d and for designation in which of the four compartments 50a-50d a disc is to be stocked; the numerals 1 to 4 on the key faces correspond to the identification numbers #1 to #4 which are assigned to the compartments of the stocker 5 as was described above with reference to FIG.3. Key 107 is a standby MD designation key α (hereinafter called the α key), and a disc inserted through the loading slot 212 after this key is depressed is loaded straight onto the turntable 220, without being stocked in any of the compartments 50a-50d. Until this disc is ejected, the MD unit functions as a single-MD player; even if there are discs stocked in the compartments 50a-50d, these discs will not be accessed. The keys 103-107 are provided with LED indicators (hereinafter called No. lamps) 103a-107a respectively, and when a disc is inserted after a No. key or the α key is depressed, the corresponding indicator lights up.

Key 108 is a play/pause key for inputting into the unit a play instruction when a disc is to be played; when this key is depressed at a time other than when a disc is already being played, the unit goes into the play mode. When the play/pause key 108 is depressed while a disc is being played, the unit goes into the pause mode or the stop mode. Keys 109 through 111 are for setting the unit into special play modes: an RPT key 109 puts the unit into a repeat play mode in which the disc is played repeatedly; an RDM key 110 puts the unit into a random play mode in which the discs and/or the tracks on a disc are played randomly; and an SCN key 111 puts the unit into a scanning play mode in which the first parts only of the tracks are played, one after another.

Key 112 instructs the unit to play the previous track, and key 113 instructs the unit to play the next track. Keys 114 and 115 respectively are fast-forward and fast-backward keys; depressing these keys while the unit is in the play mode enables the user to search for a desired passage manually, by so-called cue and review. Key 116 is an eject key which instructs the unit to eject a disc. Reference numeral 117 denotes an LCD display, discussed above with reference to FIG.2, which displays the operating state of the MD unit and can display letters, symbols and figures up to a maximum of for example 15 characters.

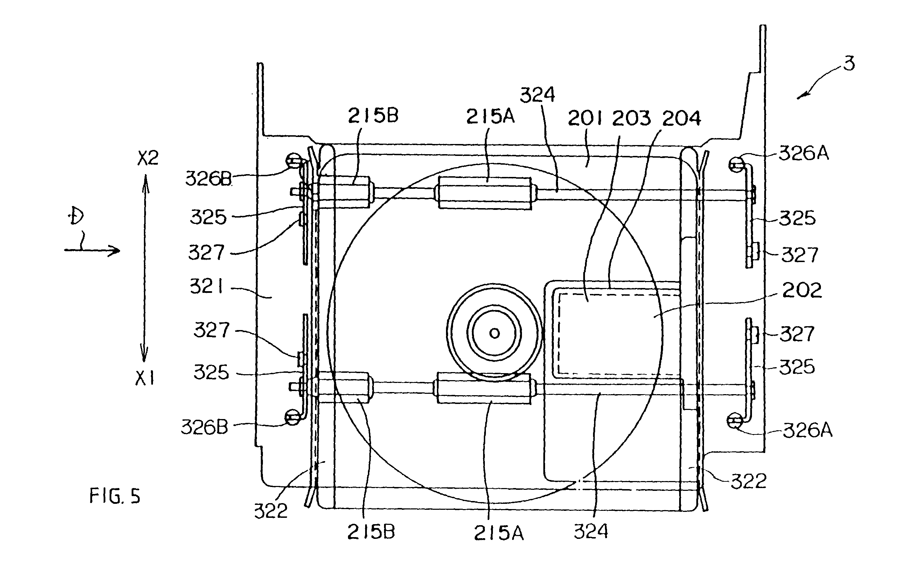

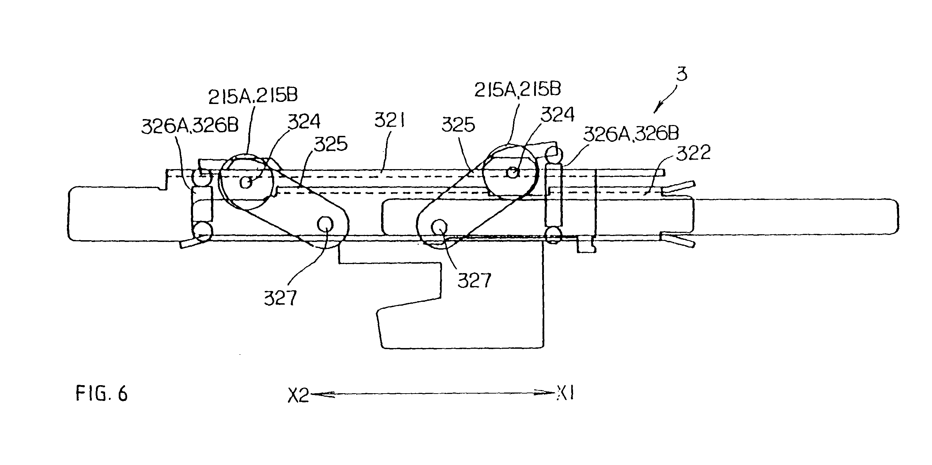

The carrier 3 will now be described in more detail, with reference to FIGS. 5 and 6. FIG. 5 is a plan view showing the construction of the carrier 3, and FIG. 6 is a side elevation view of the carrier 3 as seen from the direction indicated by the arrow D in FIG. 5.

As shown in FIG. 5, the carrier 3 is provided with: a holder chassis (hereinafter called the chassis) 321; two guides 322, which are mounted on the underside of the chassis 321 and which hold the disc in such a way that it is movable in the front-rear direction, i.e. in the direction indicated by the arrow X1-X2; and a pair of rollers 215, which each consist of two rollers 215A and 215B and which move the disc in the front-rear direction. The disc is inserted onto the carrier in such a way that the slide shutter 204 is at the side of the carrier 3. When there is no particular need to name them explicitly, the rollers 215A and 215B will for convenience be referred to simply as the rollers 215. These rollers 215A and 215B are mounted on two roller shafts 324, as shown in FIGS. 5 and 6, and are fitted to the roller shafts 324 in such a way that they each roll integrally with the roller shaft 324 on which they are mounted. The roller shafts 324 are rotatably mounted on the chassis 321, parallel to each other and oriented in the left-right direction. The rollers 215A and 215B thus mounted on the roller shafts 324 are mounted asymmetrically with respect to the disc, in such a way that they do not make contact with the slide shutter 204 when it slides.

The ends of each of the roller shafts 324 are supported by the ends of a pair of support arms 325 mounted on the sides of the chassis 321, and the support arms 325 are each pivotally mounted on a pivot support 327. The roller shafts 324 are therefore free to move up and down above the chassis 321. Also, the support arms 325 are pulled down toward the disc by coil springs 326A and 326B, so that when there is a disc on the carrier the rollers 215A and 215B make contact with the upper surface of the disc and hold the disc down onto the lower plate of the carrier 3, which is the lower disc holding surface. In this way stable disc transport is ensured. Also mounted on the carrier 3, but not shown in the drawings, are a roller drive mechanism for rotating the rollers 215A and 215B, and a shutter opening mechanism for opening the slide shutter 204.

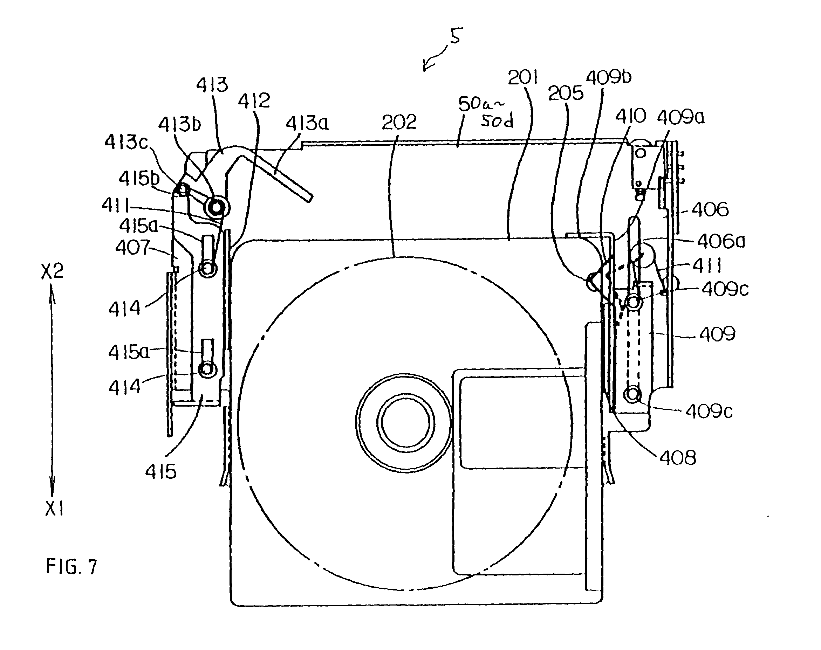

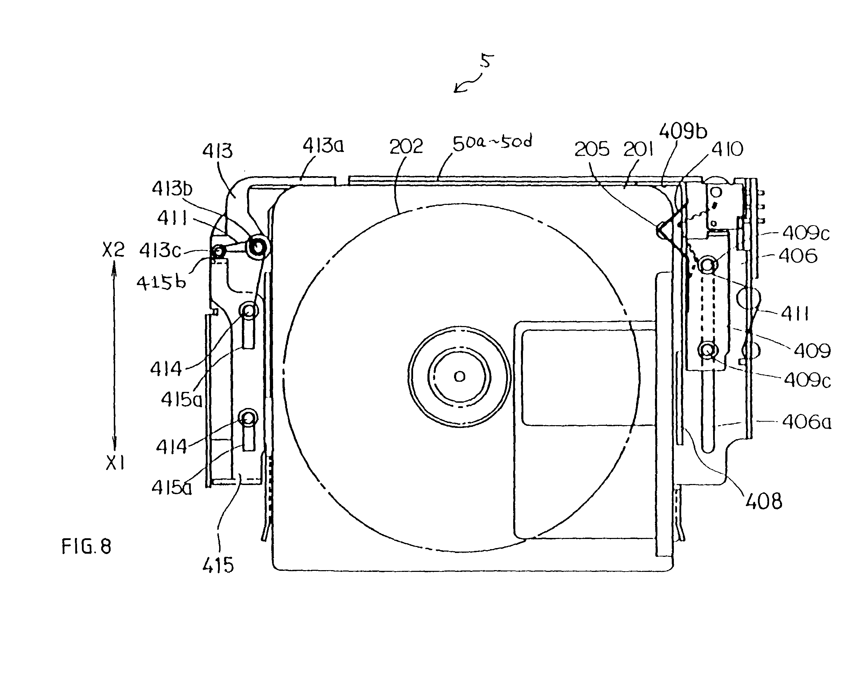

Next, the disc pull-in and eject mechanisms mounted in the stocker 5, for pulling discs into and ejecting discs from the stocker 5, will be described, with reference to FIGS.7 and 8. FIG.7 is a plan view illustrating any of the compartments 50a-50d of the stocker 5 as a disc is being pulled into, or ejected from, the compartment; and FIG.8 is a plan view illustrating any of the compartments 50a-50d of the stocker with a disc stocked in it.

As shown in FIG.7, the compartments 50a-50d of the stocker 5 are each provided with a right side support surface 406 and a left side support surface 407, which project out from beneath the disc on the right and left sides of the drawing. The disc is inserted by the carrier 3 through the front of the stocker 5 in the direction indicated by the arrow X2. A disc pull-in mechanism for pulling in a disc inserted into the stocker 5 by the carrier 3 is mounted on the right side support surface 406, and a disc eject mechanism for ejecting a disc from inside the stocker 5 out to the carrier 3 is mounted on the left side support surface 407.

First the disc pull-in mechanism will be described. A first plate-form guide part 408 is mounted between the stocker 5 and the right side support surface 406, as shown in FIG.7, and is perpendicular to the stocker 5, i.e. vertical. The right side support surface 406 is provided with a long, narrow guide slot 406a, oriented parallel to the first guide part 408, i.e. oriented in the front-rear direction. Also, a rectangular holding plate 409 is mounted on the right side support surface 406 in such a way that it can slide in the front-rear direction.

An L-shaped support part 409a is mounted on the left side of this holding plate 409 and makes contact with the first guide part 408. The end of the support part 409a forms an abutting portion 409b which projects into the stocker 5, and the front surface of this abutting portion 409b abuts with the rear edge of the disc. A holding spring 410, consisting of a plate spring provided with an elbow-shaped bent portion, is also mounted on the holding plate 409. This elbow-shaped bent portion normally projects into the stocker 5 and when a disc is there it engages with the engaging notch 205 formed in the right hand edge of the disc near the rear edge of the disc, as shown by the unbroken line in FIG.7; but during disc insertion the spring can bend elastically to the position shown in FIG.7 by a broken line.

A pair of pins 409c are mounted on the holding plate 409, one pin near the front end and one near the rear end, and these pins slidably engage with the inside of the guide slot 406a so that the holding plate 409 can slide along the guide slot 406a. A twist coil spring 411 for pulling in the disc is mounted with one end attached to the pin 409c that is located near the rear end of the holding plate 409 and the other end attached to the central part of the right side wall of the right side support surface 406.

Next, the disc eject mechanism will be described. A second plate-form guide part 412 is mounted between the stocker 5 and the left side support surface 407, perpendicular to the stocker 5. A crank-shaped lever plate 413 is mounted at the rear of the left side support surface 407. The end of the rear side of the lever plate 413 forms a pushing portion 413a which projects into the stocker 5 and pushes on the rear edge of the disc during disc ejection. A shaft 413b is mounted on a curved portion of the front side of this lever plate 413, and the lever plate 413 is mounted on the left side support surface 407 in such way that it can pivot about this shaft 413b.

A pair of guide pins 414 are mounted on the left side support surface 407, one near the front and one in the central part. A connector plate 415 is mounted on the left side support surface 407, a pair of slots 415a are provided in the connector plate 415, and the guide pins 414 are positioned in the slots 415a so that the connector plate can slide forward and backward along the slots 415a, guided by the guide pins 414.

The rear end of the connector plate 415 forms a pushing portion 415b, and this pushing portion 415b abuts with the left hand extremity 413c of the front of the lever plate 413. A twist coil spring 411 is mounted between the rearmost of the two guide pins 414 and the left side extremity 413c of the front of the lever plate 413, and the center of the coil part of this twist coil spring 411 is fitted onto the shaft 413b of the lever plate 413. The elastic action of the spring 411 causes the lever plate 413 to normally be in the position in which it is shown in FIG.8.

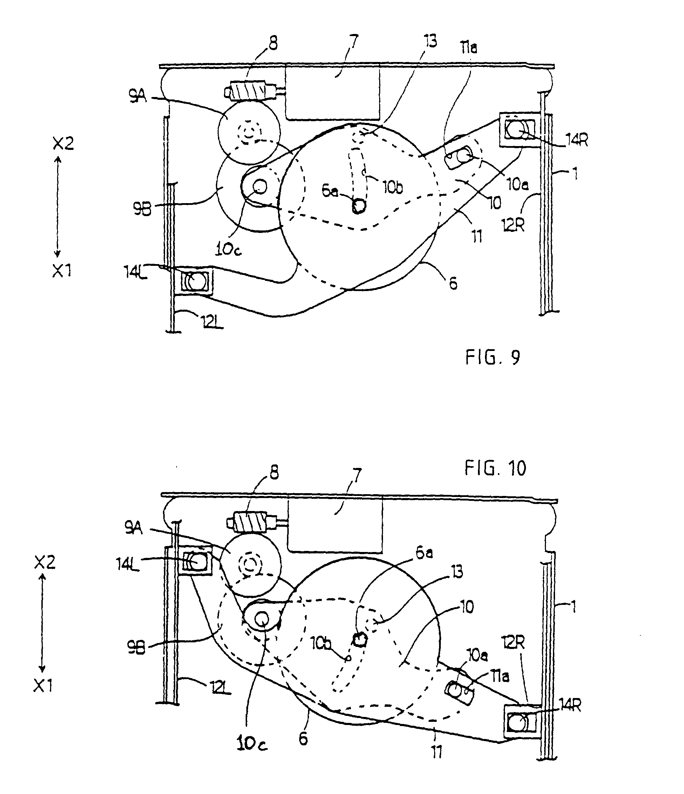

Next, the elevator mechanisms which line the carrier 3 and the stocker 5 up with each other by raising and lowering them will be described, with reference to FIGS.9 through 14. In connection with the following description it should be noted at this point that in order to minimize the dead space inside the unit, and in order to minimize the size of the unit, this preferred embodiment is constructed in such a way that the carrier 3 and the stocker 5 move in opposite directions to each other.

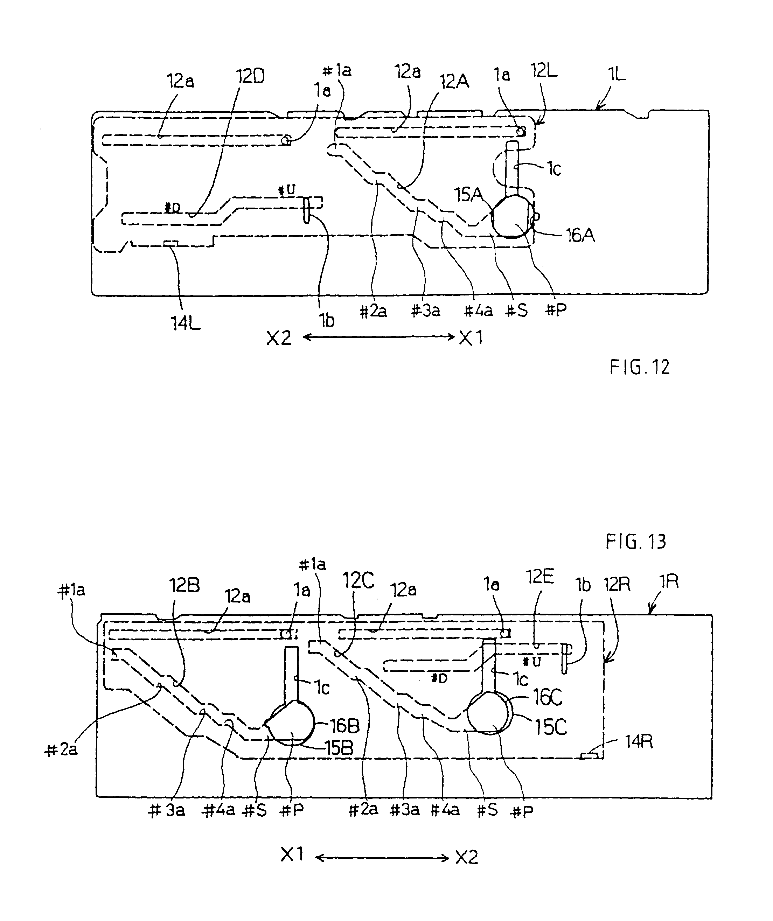

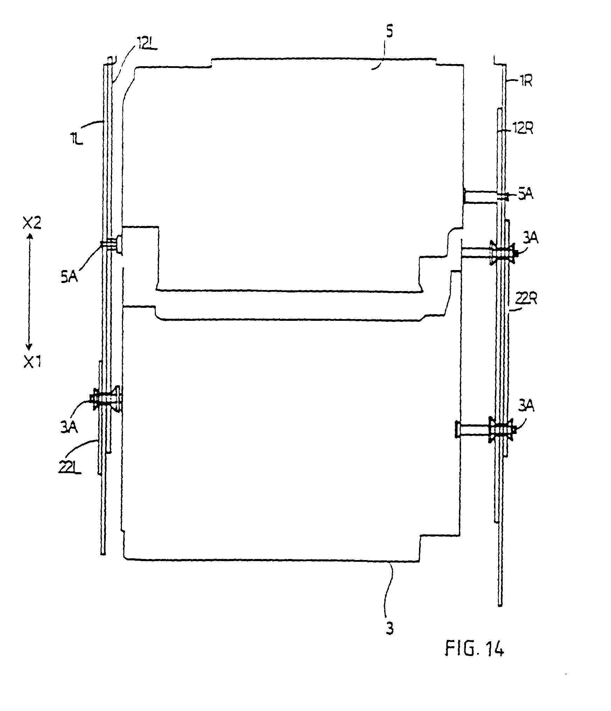

The purpose of FIGS. 9 and 10 is to illustrate the operation of a cam gear 6, mounted on the floor of the case 1, and an elevator drive link 10 and an elevator drive plate 11 which are linked to the cam gear 6. Movements of the cam gear 6 in its own plane are converted into movements perpendicular to that plane and, as will be described below with reference to FIGS.12 and 13, are used to move the carrier 3 and the stocker 5 up and down. FIG. 14 is a plan view illustrating the positions with respect to each other of the carrier 3 and the stocker 5 mounted on elevator plates 12L and 12R.

FIG. 9 is a plan view showing the elevator mechanism as it is when the carrier 3 is in its highest position, and FIG. 10 is a plan view showing the elevator mechanism as it is when the carrier 3 is in its lowest position. The elevator drive link 10 and the elevator drive plate 11 are positioned above the cam gear 6 (i.e. on the Y2 side of the cam gear 6). The cam gear 6 is mounted on the floor of the case 1 in such a way that it can rotate about its center shaft 6a. A drive motor 7 is also mounted on the floor of the case 1. This drive motor 7 has a drive shaft which extends toward the left of the drawing, and a worm gear 8 is fitted to the end of this drive shaft. Two transmission gears 9A and 9B are mounted, rotatably about their respective shafts, on the floor of the case 1, and mesh with each other. The transmission gear 9A also meshes with the worm gear 8, and the transmission gear 9B also meshes with the cam gear 6.

A generally diamond-shaped elevator drive link 10 is positioned over the upper surface of this cam gear 6. This elevator drive link 10 is pivotally fitted to the shaft 10c of the transmission gear 9B. A circular arc-shaped guide hole 10b, whose center of curvature is the shaft 10c, is formed in the central portion of the elevator drive link 10. The center shaft 6a of the cam gear 6 passes through this guide hole 10b. A cam follower 13 is mounted on and projects downward from the underside of the elevator drive link 10. An engaging pin 10a is mounted on and projects upward from the right hand end of the upper surface of the elevator drive link 10.

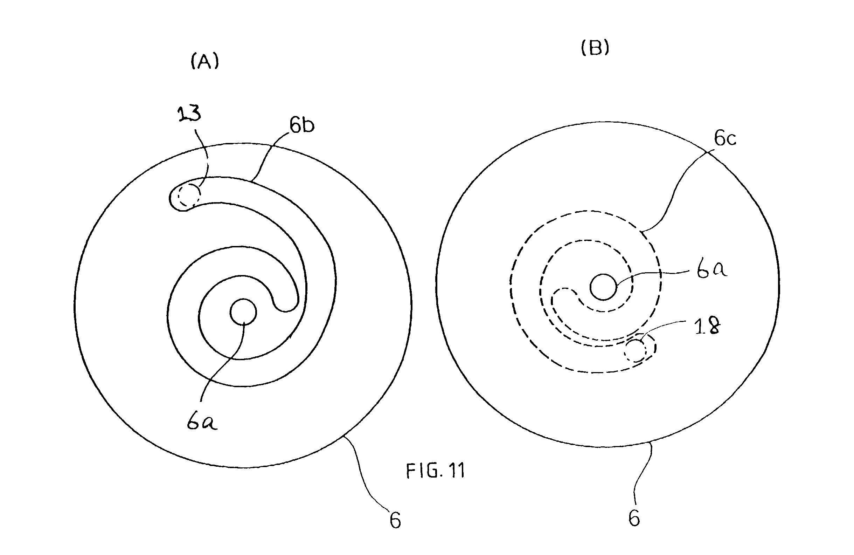

An upper surface cam groove 6b is formed in the upper surface of the cam gear 6, as shown in FIG.11(A), and the cam follower 13 projects into this upper surface cam groove 6b. And, as shown in FIG. 11(B), an underside cam groove 6c is formed in the underside of the cam gear 6, and a cam follower 18, which will be further discussed below, projects into this lower surface cam groove 6c.

An elevator drive plate 11 is mounted over the upper surface of the elevator drive link 10, as shown in FIG.9. This elevator drive plate 11 is a plate having a roughly circular central portion and two arm portions which extend toward the left and right of the drawing, and is pivotally mounted on the center shaft 6a of the cam gear 6. An engaging hole 11a is formed in the central portion of the arm portion of the elevator drive plate 11 which extends toward the right of the drawing, and the engaging pin 10a mounted on the elevator drive link 10 projects into this engaging hole 11a.

It is noted here that this MD unit is provided with a carrier position sensor (not shown in the drawings) which detects the position of the carrier 3 by detecting the position of one of two elevator plates 12L and 12R which move in linkage with the elevator drive plate 11. Based on the output of this carrier position sensor, the position of the carrier 3 in its vertical range is detected, and the carrier 3 can be accurately lined up with the loading slot 212 and the compartments 50a-50d of the stocker 5. This enables discs to be loaded onto and ejected from the carrier 3 smoothly.

As shown in FIGS. 9 and 10, two actuator pins 14L and 14R are mounted on and project upward from the left hand and right hand ends respectively of the elevator drive plate 11.
Through these actuator pins 14L and 14R, the two elevator plates 12L and 12R are linked to the elevator drive plate 11.
Next, the elevator plates 12L and 12R will be described, with reference to FIGS. 12 through 14.
FIG.12 is a side elevation view, as seen from the direction indicated by the arrow E in FIG. 14, illustrating the elevator plate 12L fitted to a side plate 1L which constitutes part of the left side surface of the case 1;
FIG.13 is a side elevation view, as seen from the direction indicated by the arrow F in FIG.14, illustrating the elevator plate 12R fitted to a side plate 1R which constitutes part of the right side surface of the case 1; and FIG.14 is a plan view illustrating the carrier 3 and the stocker 5 mounted on the elevator plates 12L and 12R.

As shown in FIG. 14, the elevator plates 12L and 12R are mounted on the inner surfaces of the side plates 1L and 1R in such a way that the elevator plates 12L and 12R can slide in the front-rear direction. And, as shown in FIGS.12 and 13, two guide pins 1a are mounted on the inner surfaces of each of the side plates 1L and 1R, and these guide pins 1a pass through guide slots 12a formed in the elevator plates 12L and 12R. This enables the elevator plates 12L and 12R to slide straight in the front-rear direction, i.e. in the direction X1-X2.

As shown in FIG. 14, three holder pins 3A and two stocker pins 5A are mounted on the carrier 3 and the stocker 5 respectively. One holder pin 3A is mounted on the left side edge portion of the carrier 3, and the other two holder pins 3A are mounted on the right side edge portion of the carrier 3. One stocker pin 5A is mounted on each of the left and right side edge portions of the stocker 5.

As shown in FIG. 12, the side plate 1L is provided with a vertical guide slot 1c, and a holder cam 12A consisting of a stepped slot is formed in the elevator plate 12. And, as shown in FIG.13, the side plate 1R is provided with two vertical guide slots 1c, and a front holder cam 12B and a rear holder cam 12C are formed in the elevator plate 12R. The holder pins 3A pass through the guide slots 1c and the holder cams 12A, 12B and 12C, and the holder pins 3A are held in the horizontal direction by the guide slots 1c and are held in the vertical direction by the holder cams 12A, 12B, and 12C. In this preferred embodiment the holder cams 12A, 12B, and 12C are each provided with five steps, and run diagonally from the highest stop to the lowest step. The holder cam 12A in the elevator plate 12L is inclined so that its front end, i.e. the end nearer the X1 side, is the lower end, and the holder cams 12B and 12C in the elevator plate 12R are inclined so that their rear ends, i.e. the ends nearer the X2 side, are the lower ends. In the description that follows, the top four steps of the holder cams 12A, 12B, and 12C, from the top step to the fourth step from the top, will be referred to respectively as #1a-#4a, and the bottom step will be called #S. The horizontal dimension of #S is made slightly longer than that of #1a-#4a. Also, the difference in height between #3a and #4a is made 1/2 of the difference in height between #1a and #2a and between #2a and #3a.

Three first large diameter holes 15A, 15B, and 15C are formed at the lower ends of the guide slots 1c and are continuous with the guide grooves 1c. The size of these first large diameter holes 15A, 15B, and 15C is made such that they encompass the vertical range through which the player 4 is free to move when it is floating.

A second large diameter hole 16A is formed at the front end of and continuous with the lowest step of the holder cam 12A, and two second large diameter holes 16B and 16C are formed at the rear ends of and continuous with the lowest steps of the holder cams 12B and 12C respectively. The second large diameter holes 16A, 16B, and 16C are of roughly the same size and shape as the first large diameter holes 15A, 15B, and 15C. The areas where the first large diameter holes 15A, 15B, and 15C overlap with the second large diameter holes 16A, 16B, and 16C respectively will be called #P.

A vertical holding slot 1b is also formed in each of the side plates 1L and 1R, as shown in FIGS. 12 and 13. Two stocker cams 12D and 12E are formed in the elevator plates 12L and 12R respectively. The stocker pins 5A, mounted on the stocker 5, pass through the stocker cams 12D and 12E and the holding slots 1b, and each stocker pin is held in the horizontal direction by the holding groove 1b through which it passes and is held in the vertical direction by the stocker cam 12D or 12E through which it passes.

The stocker cams 12D and 12E are crank-shaped grooves which have an upper step and a lower stop and are oriented horizontally. The rear part of the stocker cam 12D in the elevator plate 12L is the lower step, and the front part of the stocker cam 12E in the elevator plate 12R is the lower step. In the description that follows, the upper steps of the stocker cams 12D and 12E will be called #U, and the lower steps will be called #D. The difference in height between #U and #D is made 1/2 of the difference in height between #1a and #2a and between #2a and #3a.

A guide pin (not shown in the drawings) is mounted on and projects rearward from the rear part of the stocker 5, and this guide pin passes through a guide slot (not shown in the drawings) formed in the rear part of the case 1, i.e. formed in the back wall of the case 1. This guide pin is for stabilizing the attitude of the stocker 5, but if three stocker pins 5A instead of two are used to support the stocker 5, in the same way as the three holder pins 3A are used to support the carrier 3, this guide pin can be dispensed with.

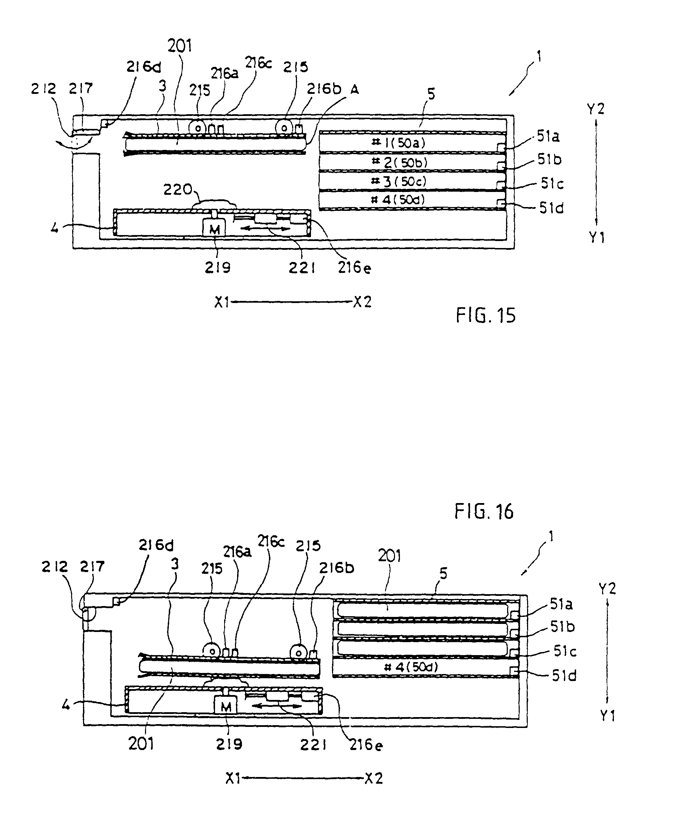

By means of this construction the carrier 3 and the stocker 5 are moved up and down by the elevator plates 12L and 12R being moved in opposite directions to each other.
The relationship between the positions of the holder pins 3A in the holder cams 12A, 12B, and 12C and the positions of the stocker pins 5A in the stocker cams 12D and 12E is as follows. When the holder pins 3A are in #1a-#3a, the stocker pins 5A are in #D. When the holder pins 3A move from #3a into #4a, the stocker pins 5A move from #D into #U. And when the holder pins 3A are in #4a, #S, or #P, the stocker pins 5A are in #U. With this construction, when the carrier 3 is positioned in front of any of the compartments 50a-50c, the stocker 5 is in its lower position, as shown in FIG. 15, and when the carrier is in front of the compartment 50c, or is in position over the player 4, the stocker 5 is in its higher position, as shown in FIG. 16. That is, when the carrier 3 is in a high position the stocker is in a low position, and when the carrier 3 is in a low position the stocker 5 is in a slightly higher position than it is when the carrier 3 is in a high position, and this relative movement allows the overall volume of the unit to be reduced. And because, as mentioned above, the height difference between #3a and #4a and between #U and #D is 1/2 the height difference between #1a and #2a and between #2a and #3a, the carrier 3 and the stocker 5 move over the same distance relative to one another when the carrier moves between #3a and #4a as they do when the carrier moves between #1a and #2a or between #2a and #3a.

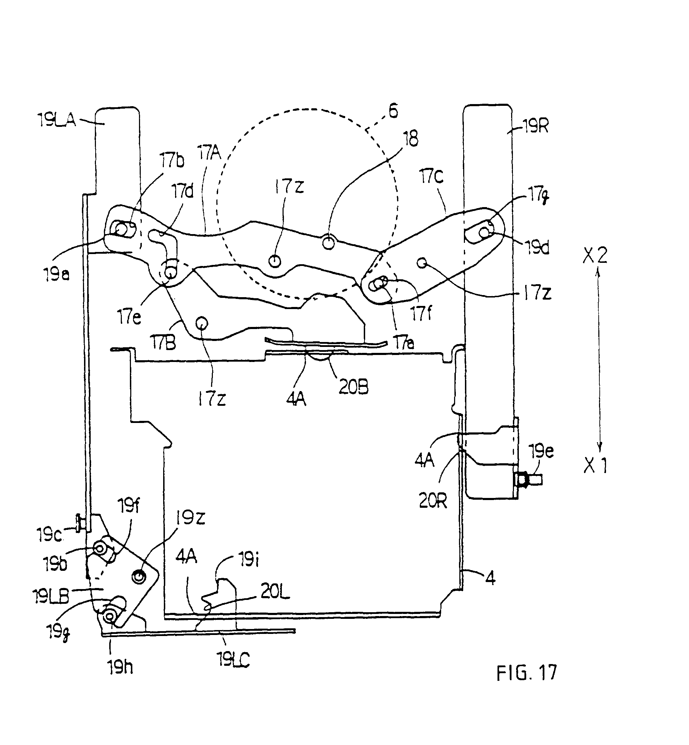

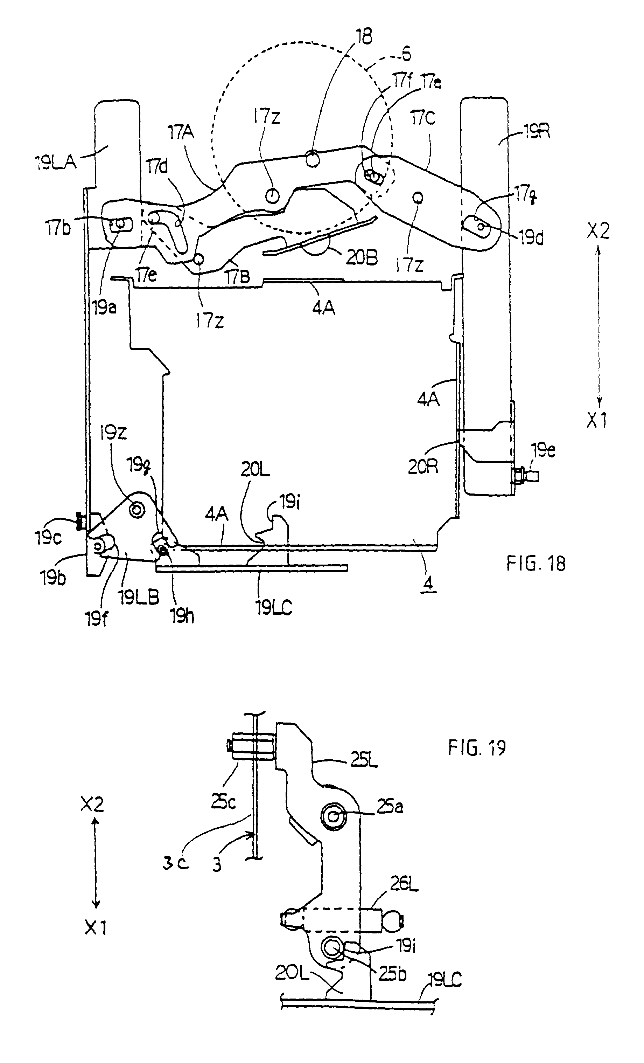

Next, the player 4 floating mechanism will be described, with reference to FIGS.17 and 18. FIG. 17 is a plan view of the floating mechanism as it is when the floating lock is engaged. FIG. 18 is a plan view of the floating mechanism as it is when the floating lock is disengaged. This player 4 floating mechanism puts the player 4 into a floating state during disc playing and while an MD is being loaded onto the player 4, and at all other times keeps the player 4 in a locked state in which it is immovably fixed to the case 1.
The lock arm 17A shown in the drawings is positioned beneath (i.e. on the Y1 side of) the cam gear 6.

As shown in FIG. 17, three lock arms 17A, 17B, and 17C are mounted underneath the cam gear 6. These lock arms 17A, 17B, and 17C are all provided with a centrally mounted shaft 17z and are mounted on the floor of the case 1 in such a way that they can rotate about their respective shafts 17z. A link pin 17a is mounted on the right hand end of the lock arm 17A, and an engaging hole 17b is formed in the left hand end of the lock arm 17A. Also, an elbow-shaped cam slot 17d is formed near the left hand end of the lock arm 17A. The cam follower 18, which was mentioned above with reference to FIG. 11(B), is mounted on and projects upward from the lock arm 17A.

A spiral-shaped underside cam groove 6c is formed in the underside of the cam gear 6, as shown in FIG. 11(B), and the cam follower 18 projects into this underside cam groove 6c.

The lock arm 17B is positioned in front of and partly overlapping with the lock arm 17A. This lock arm 17B has an engaging pin 17e mounted on its left hand end, and this engaging pin 17e projects into the cam slot 17d. A locking claw 20B is formed on and projects forward from the front side of the lock arm 17B.

The lock arm 17C is positioned to the right of and partly overlapping with the lock arm 17A. This lock arm 17C has a link hole 17f formed in its left hand end and an engaging hole 17g formed in its right hand end. The link pin 17a, mounted on the lock arm 17A, projects into the link hole 17f.

A lock plate 19LA, long in the front-rear direction, is mounted to the left of and partly overlapping with the lock arm 17A. A link pin 19a is mounted on and projects upward from the rear part of this lock plate 19LA, and this link pin 19a projects into the engaging hole 17b in the lock arm 17A.
The lock plate 19LA is mounted on the inner side of the side plate 1L in such a way that it can slide in the front-rear direction. A link pin 19b is mounted on the front end part of the lock plate 19LA. A pushing pin 19c is mounted near the front end part of the lock plate 19LA in such a way that it projects out to the left.
A lock plate 19R, long in the front-rear direction, is mounted to the right of and partly overlapping with the lock arm 17C. A link pin 19d is mounted on and projects upward from the rear part of this lock plate 19R, and this link pin 19d projects into the engaging hole 17g formed in the lock arm 17C. The lock plate 19R is mounted on the inner side of the side plate 1R in such a way that it can slide in the front-rear direction. A pushing pin 19e is mounted on the lock plate 19R in such a way that it projects out to the right. Also, a locking claw 20R is formed on the front end part of the lock plate 19R in such a way that it projects out to the left.

A lock plate 19LB is positioned near the front end part of the lock plate 19LA. This lock plate 19LB is a generally right-angled triangle-shaped plate, and is pivotally mounted on a shaft 19z mounted on the floor of the case 1. This lock plate 19LB has a cutout portion 19f formed in its rear acute corner and a cutout portion 19g formed in its front acute corner. The link pin 19b, mounted on the lock plate 19LA, passes through the cutout portion 19f.

A lock plate 19LC is mounted next to the lock plate 19LB. This lock plate 19LC is mounted on the floor of the case 1 at the front of the case 1 in such a way that it can slide in the left-right direction. A link pin 19h is mounted on the left hand end part of the lock plate 19LC.

This link pin 19h passes through the cutout portion 19g formed in the lock plate 19LB. A locking claw 20L is formed on the central portion of the lock plate 19C in such a way that it projects rearward from the lock plate 19LC. A pushing portion 19i is formed on the end of this locking claw 20L.

The 'locked state' mentioned above, in which the player 4 is locked by the floating mechanism, refers to a state in which the three locking claws, i.e. the locking claw 20B of the lock arm 17B, the locking claw 20R of the lock plate 19R, and the locking claw 20L of the lock plate 19LC, have been pushed into cutout portions 4A formed in the sides of the player 4; this holds the player 4 so that it is immovable with respect to the body of the MD unit.

Also, the cutout portions 4A are provided with taper portions, which cause the player 4 to be pushed in a predetermined direction, for example down onto the case 1, when the locking claws 20L and 20R are pushed onto them. In other words, the sides of the player 4, which is supported in a floating state on buffer members such as springs, are provided with wedge-shaped cutout portions 4A, or are provided with diamond-shaped holes, and by the engagement or mating of the locking claws 20B, 20L, and 20R with these cutout portions or holes, the floating state of the player is locked and the player is rendered immovable.

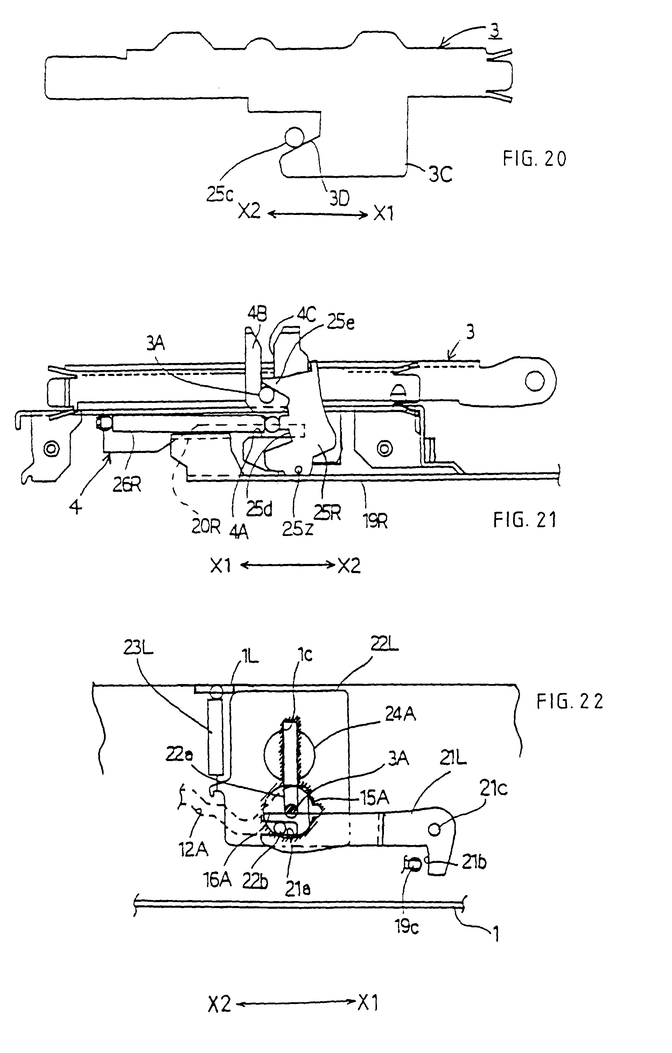

Next, the linkages which link the carrier 3 to the player 4 will be described, with reference to FIGS. 19 through 21. FIG. 19 is a plan view of a linkage whose main part is a chucking plate 25L; FIG. 20 is a simplified view of the player part 3 as seen from the left, and illustrates the linking action of the chucking plate 25L; and FIG. 21 is a view, as seen from the left of the player part 3, of a linkage whose main part is a chucking plate 25R. The main parts of these linkages are the chucking plate 25L and the chucking plate 25R.

In the player 4, as shown in FIG. 19, a chucking plate 25L, long in the front-rear direction, is rotatably mounted on a shaft 25a mounted on the floor of the boxlike body portion of the player 4. A pushing-point part 25b is mounted on and projects upward from the front end part of this chucking plate 25L. A link roller 25c is rotatably mounted on the rear end part of the chucking plate 25L. One end of a chucking plate spring 26L is attached to the left side edge of the chucking plate 25L, and the other end of the chucking plate spring 26L is attached to the boxlike body part of the player 4. The chucking plate spring 26L therefore causes the chucking plate 25L to normally be pushing the roller 25c toward the left.
As shown in FIG. 20, a link portion 3C is formed on and projects downward from the left side of the carrier 3.A V-notch portion 3D is formed in the rear part of the link portion 3C. The linking roller 25c mounted on the chucking plate 25L engages with the V-notch portion 3D.

The pushing-point part 25b is positioned so that it can abut with the pushing portion 19i on the lock plate 19LC. When the pushing portion 19i reaches its floating-locked position, it pushes the pushing-point part 25b and the chucking plate 25L pivots clockwise from the position in which it is shown in FIG.19. This causes the link roller 25c mounted on the end of the chucking plate 25L to move inward toward the central part of the player and disengage from the link portion 3C of the carrier 3, and the carrier 3 is thus disengaged from the player 4.

When the pusher 19i moves in the opposite direction and reaches its floating-unlocked position, the above process occurs in reverse: the link roller 25c engages with the link portion 3C, and the carrier 3 is engaged with the player 4.

As shown in FIG. 21, the chucking plate 25R is mounted on the right side portion of the player 4 in such a way that it can pivot about the shaft 25z. A pushing-point portion 25d is provided on the lower portion of the front edge of the chucking plate 25R. The chucking plate 25R is mounted to the right (the side nearer the reader of FIG. 21) of the cutout portion 4A formed in the right side portion of the player 4, and the pushing-point portion 25d is pushed by the locking claw 20R when the locking claw 20R engages with the cutout portion 4A. This causes the chucking plate 25R to pivot clockwise from the position in which it is shown in FIG.21.

A linking claw 25e is mounted on and projects forward from the upper end part of the chucking plate 25R. A link portion 4B is mounted on and projects upward from the right side portion of the player 4, and a guide slot 4C is cut into this link portion 4B. The holder pin 3A mounted at the front end of the right side edge portion of the carrier 3, shown in FIG.14, passes through this guide slot 4C.
One end of a chucking plate spring 26R is attached to the front edge portion of the chucking plate 25R, and the other edge of this chucking plate spring 26R is attached to the front portion of the right side edge portion of the player 4. Therefore, the chucking plate 25R is normally pulled forward by the chucking plate spring 26R. Thus, as shown in FIG. 21, when the locking claw 20R is not in contact with the pushing-point portion 25d, the linking claw 25e pushes down from above onto the holder pin 3A projecting from the guide slot 4C.

The detailed operation of these mechanisms will be explained later, but a brief description of how the carrier 3 is held onto the player 4 will be included here: When the cam gear 6 rotates and causes the elevator drive plate 11 to rotate clockwise as shown by FIGS. 9 and 10, the carrier holder pins 3A shown in FIG. 14 reach the lower extremities of the holder cams 12A, 12B, and 12C, i.e. #S and #P, shown in FIGS.12 and 13, and the carrier 3 descends onto the player 4. The rotation of the cam gear 6 also causes the locking claws 20B, 20L, and 20R to disengage from the cutout portions 4A, as shown by FIGS.17 and 18, so the floating lock is released.

Because in this process the lock plate 19LC shown in FIGS.17 through 19 moves to the right, the chucking plate 25L pivots in the counterclockwise direction of FIG. 21 under the elastic force of the chucking plate spring 26L, the linking roller 25c moves in the X1 direction of FIG. 20 and engages with the V-notch portion 3D on the carrier 3, and the carrier 3 is thereby clamped onto the player 4. Similarly, because the lock plate 19R moves in the X1 direction, the chucking plate 25R pivots in the counterclockwise direction of FIG. 21 under the elastic force of the chucking plate spring 26R, and the respective holder pin 3A is pushed down upon by the linking claw 25e, and thus here also the carrier 3 is clamped onto the player 4.

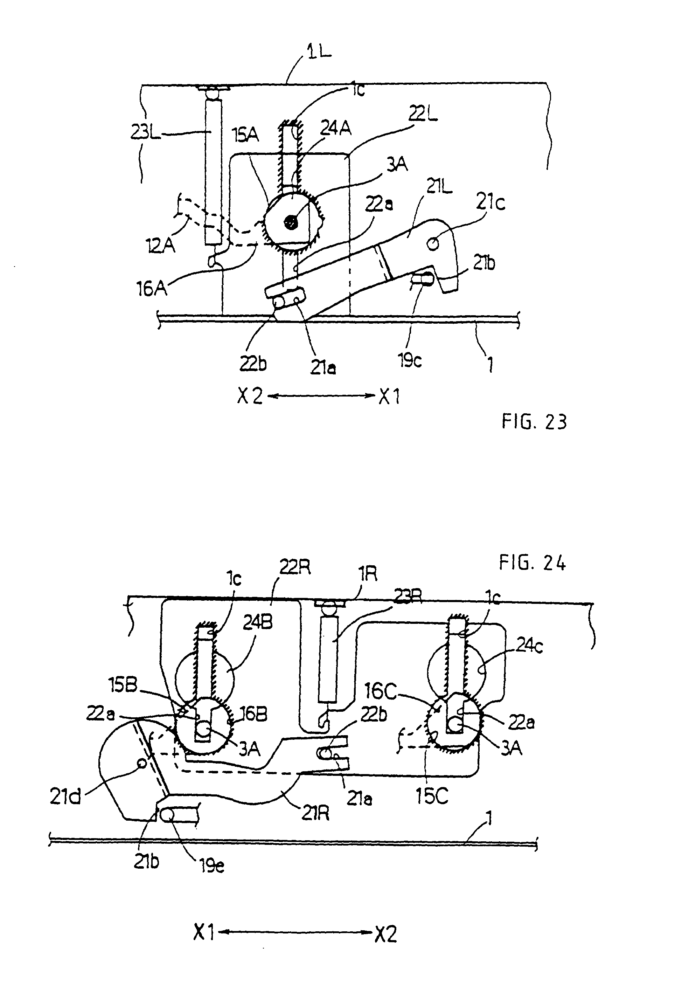

As shown in FIG. 14, two sub guide plates 22L and 22R are mounted alongside the side plates 1L and 1R. Because, as shown in FIGS. 12 and 13, the large diameter holes 15A, 15B, and 15C are formed at the lower ends of the three guide slots 1c formed in the side plates 1L and 1R, the guide pins 3A are not guided by the guide slots 1c in this region. Therefore, when the holder pins 3A are for example in #4, they are not held in position in the horizontal direction by the guide slots 1c. To solve this problem, this preferred embodiment is provided with the sub guide plates 22L and 22R shown in FIGS. 22 through 25.

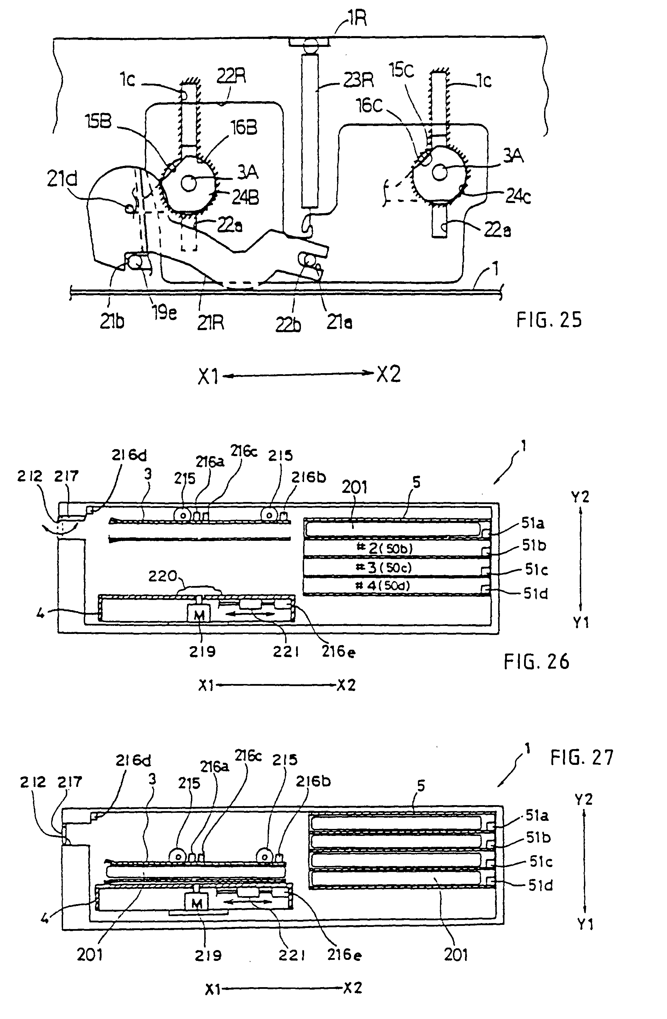

The elevator mechanisms of these sub guide plates 22L and 22R will now be described, with reference to FIGS. 22 through 25. FIGS.22 and 23 are views of the elevator mechanism of the guide plate 22L as seen from the direction indicated by the arrow E in FIG. 14. FIGS. 24 and 25 are views of the elevator mechanism of the guide plate 22R as seen from the direction indicated by the arrow F in FIG. 14. In FIGS.22 and 23, the reference numerals 1c and 15A respectively denote the guide slot 1c and the first large diameter hole 15A formed in the side plate 1L, and there are some portions of these features which are hidden by the sub guide plate 22L and should be drawn here with broken lines; however, in order to make the drawing easier to understand, these features have instead been drawn with solid lines and identified by hatching. Similarly, in FIGS . 24 and 25, the reference numerals 1c and 15B and 15C respectively denote the guide slots 1c and the first large diameter holes 15B and 15C formed in the side plate 1R, and some portions of these features, being hidden by the sub side plate 22R, should also be drawn here with broken lines; however, for the same reason, these features have also been drawn with solid lines and identified by hatching.

As shown in FIGS. 22 and 23, a sub guide link 21L is rotatably mounted on a shaft 21c mounted on the outer side of the side plate 1L. The generally rectangular sub guide plate 22L is mounted between the sub guide link 21L and the side plate 1L in such a way that it can move up and down.
And, as shown in FIGS. 24 and 25, a sub guide link 21R is rotatably mounted on a shaft 21d mounted on the outer side of the side plate 1R. The generally rectangular sub guide plate 22R is mounted between the sub guide link 21R and the side plate 1R in such a way that it can move up and down.

Each of the sub guide plates 21L and 21R has a U-shaped holding portion 21a formed in its free end and a pushing-point portion formed on and projecting downward from its base end. These pushing-point portions are positioned so that they can be abutted by the pushing pins 19c and 19e of the lock plates 19LA and 19R respectively.

A sub guide plate spring 23L is attached at one end to the sub guide plate 22L and at the other end to the upper edge of the side plate 1L, and similarly a sub guide plate spring 23R is attached at one end to the sub guide plate 22R and at the other end to the upper edge of the side plate 1R. The sub guide plates 22L and 22R are therefore pulled upward by the sub guide plate springs 23L and 23R. An engaging pin 22b is mounted near the lower edge of each of the sub guide plates 22L and 22R, and these engaging pins engage with the holding portions 21a of the sub guide links 21L and 21R.

The sub guide plate 22L is provided with one sub guide slot 22a, and the sub guide plate 22R is provided with two sub guide slots 22a. These sub guide slots 22a are positioned so that they lie on the same vertical straight lines as the guide slots 1c in the side plates 1L and 1R (shown hatched in FIGS. 22-25), and the holder pins 3A which pass through the guide slots 1c also pass through the sub guide slots 22a.
Third large diameter holes 24A, 24B, and 24C are formed at the upper ends of the sub guide slots 22a. These third large diameter holes 24A, 24B, and 24C are of similar size and shape to the first large diameter holes 15A, 15B, and 15C in the side plates 1L and 1R and the second large diameter holes 16A, 16B, and 16C in the elevator plates 12L and 12R.

With this construction, when the lock plates 19LA and 19R have moved from the positions in which they are shown in FIG. 17 to the positions in which they are shown in FIG. 18, and the floating structure of the player 4 has thus been released from its locked state, the pushing pins 19c and 19e each push on their respective pushing-point portions 21b on the sub guide links 21L and 21R. This causes the sub guide links 21L and 21R to pivot, as shown in FIGS.23 and 25, so that the guide plates 22L and 22R are lowered. In the floating-unlocked state the elovator plates 12L and 12R are positioned such that their second large diameter holes 16A, 16B, and 16C are aligned respectively with the first large diameter holes 15A, 15B, and 15C in the side plates 1L and 1R, and the above-mentioned lowering of the sub guide plates 22L and 22R at this time results in the third large diameter holes 24A, 24B, and 24C also being aligned with the first large diameter holes and the second large diameter holes.

As a result, the holder pins 3A of the carrier 3 are positioned in the large diameter holes and the carrier 3 and the player 4 to which it is attached can float unhindered.

When, in the reverse process, the player is put into the floating-locked state, the sub guide links 21L and 21R pivot in the reverse direction and the sub guide plates 22L and 22R are raised. As a result, the sub guide slots 22a, i.e. the narrow slots leading off downward from the third large diameter holes, are aligned with the guide slots 1c in the elevator plates 12L and 12R, i.e. the narrow slots leading off upward from the first large diameter holes, and the holder pins 3A are therefore prevented from moving in the horizontal direction and can only move up and down.
Therefore, the carrier 3 can thereafter be smoothly and stably moved up and down by the sliding action of the elevator plates 12L and 12R; that is to say, the carrier 3 can be smoothly and stably moved up and down by the holder cams 12A, 12B, and 12C acting on the holder pins 3A as the elevator plates 12L and 12R slide back and forth.

Next, the operation of an MD unit constructed as described above in accordance with the present preferred embodiment will be explained. First, the operation of the carrier 3 will be explained; then the operation of the pull-in and eject mechanisms of the stocker 5; then the standby states of the main parts; then the operation of the carrier 3 and stocker 5 elevator mechanism; then the mutual joining and detaching of the carrier 3 and the player 4; and then the player 4 locking and lock releasing operations of the floating mechanism.

First, the operation of the carrier 3 will be described, with reference to FIGS. 3, 5, and 6.

A disc inserted through the loading slot 212 can be loaded into the stocker 5 by the carrier 3. Also, any one of several discs stocked in the stocker 5 can be selected by the user, and the selected disc can be carried by the carrier 3 to the player 4 and the data recorded on the disc replayed.

When a disc is to be stocked in the stocker 5, the carrier 3 is moved into position facing the loading slot 212 by an elevator mechanism, whose operation will be described hereinafter.

The user inserts a disc into the loading slot 212 with the disc oriented such that the slide shutter 204 is on the right. When the disc insertion sensor 216a detects that a disc is being inserted, the rollers 215A and 215B mounted on the carrier 3 are rotated by the roller drive mechanism (not shown in the drawings), and transport the inserted disc into the carrier 3 up to a predetermined holding position, as shown in FIG. 15. The rollers 215A and 215B are pressed down onto the upper surface of the inserted disc by the action of the springs 326A and 326B.

Next, the carrier 3 is lowered by the carrier 3 and stocker 5 elevator mechanism, whose operation will be described hereinafter, into position facing one of the disc compartments 50a-50d, and the rollers 215A and 215B rotate again and eject the disc from the carrier 3. When the disc has been ejected from the carrier to a certain extent, the disc pull-in mechanism described above, of which there is one in each of the disc compartments 50a-50d, pulls the disc into the disc compartment up to a predetermined stock position, as shown in FIG. 26.

When a disc stocked in one of the compartments 50a-50d is to be removed from the loading slot 212, the operation described above is carried out in reverse.

It is noted in connection with the operation of the carrier 3 that because, as shown in FIG. 5, the rollers 215A and 215B are positioned far enough to the left not to make contact with the slide shutter 204, even if the disc on the carrier 3 is a recordable type in which the slide shutter 204 lies over part of both sides of the disc cartridge, the opening and closing action of the slide shutter 204 will not be obstructed by the rollers 215A and 215B. Trouble-free recording and playback of these discs also is therefore possible. Furthermore, while the disc is being transported, problems such as the slide shutter 204 being opened by the rotation of the rollers 215A and 215B and the disc then not being correctly conveyed, or the rollers 215A and 215B then damaging the surface of the disc of a recordable-type MD that has become exposed through the upper access window 203, will not occur. And, even if a disc is somehow mistakenly inserted with the slide shutter 204 open, the disc is transported without any damage being inflicted on either the slide shutter or the recording medium.

It is also noted that if for example the spring 326A on the slide shutter side, i.e. the right side of the carrier, is provided with a greater tension than the left side spring 326B, the rollers 215A will press down on the upper surface of the disc with more force than the rollers 215B and therefore will drive the disc with more force. As a result, the bias in the driving forces on the disc caused by the asymmetrical positioning of the rollers 215A and 215B will be corrected, and the disc will not be turned as it is transported. That is, when the rollers 215A and 215B exert the same driving force on the disc, the driving force exerted on the left side of the disc is strong, the side of the disc on the side of the carrier 3 where the rollers 215B are mounted is subject to a greater driving force than the slide shutter 204 side, and there is the danger that the disc as a whole will turn and become oriented at an angle to the direction in which it is being transported. However, if the construction described above is adopted, this kind of problem will not occur.

Alternatively, if, instead of altering the tension in the springs 326A and 326B, the diameter of the slide shutter 204 side rollers 215A is made greater than the diameter of the left side rollers 215B, turning of the disc during disc transport can be prevented even though the springs 326A and 326B have the same strength. That is, if the diameter of the rollers 215A is made greater than the diameter of the rollers 215B, the large diameter rollers 215A will drive the disc with greater force than the smaller diameter rollers 215B, the bias in the driving forces on the disc caused by the asymmetrical positioning of the rollers 215 will be corrected, and the disc will not be angled with respect to the direction in which it is being transported.

And of course it would also be possible to both alter the tension in the springs 326A, 326B and alter the diameter of the rollers 215A, 215B as well.
And one relatively long roller could be used in place of each pair of rollers 215A, 215B. In this case, when altering the diameter of the rollers, the rollers could be given a tapered form or a stepped form.
And, although in FIG.5 two roller shafts 324 are mounted across the carrier, it would of course be possible to use a single roller shaft or three or more roller shafts instead.
And, while in the above description the disc is prevented from turning during disc transport, by the force of the spring 326A being made greater than the force of the spring 326B and/or by the diameter of the roller 215A being made greater than the diameter of 215B, another option is to instead make the disc press hard against the side surface of the right hand guide 322, by reversely making the force of the left side spring 326B greater than the force of the spring 326A and/or by making the diameter of the roller 215B greater than the diameter of the roller 215A.

Next, the operation of the disc pull-in and eject mechanisms mounted in the disc compartments 50a-50d of the stocker 5 will be described, with reference to FIGS.7 and 8. First, the operation of the disc pull-in mechanisms, which pull discs into the disc compartments 50a-50d, will be described.

When a compartment 50a-50d of the stocker 5 is empty, because the rear pin 409c to which one end of the twist coil spring 411 is attached is positioned forward of the other end of the twist coil spring 411, the force of the twist coil spring 411 is directed forward and acts to keep the holding plate 409 at the front of its range of movement.

When a disc brought by the carrier 3 enters the front part of the stocker 5, the holding spring 410 engages with the engaging notch 205 in the right hand edge of the disc, and the rear part of the disc abuts with the abutting portion 409b of the rear of the holding plate 409.

The roller drive mechanism on the carrier 3 then pushes the disc further back, and when the end of the twist coil spring 411 that is attached to the pin 409c becomes rearward of the other end, the direction of the force of the twist coil spring 411 on the pin 409c changes from forward to rearward. This force pushes the holding plate 409 rearward. When this happens, because the disc is engaged with the holding spring 410, the disc moves rearward with the holding plate 409 and leaves the carrier 3. In this way the disc is pulled all the way into the disc compartment 50a-50d.

Next, the operation of the disc eject mechanisms, which eject discs from the disc compartments 50a-50d into the carrier 3, will be described. First, an actuator plate, not shown in the drawings, mounted on the carrier 3, pushes rearward on the connector plate 415 of the disc compartment 50a-50d containing the required disc. This causes the connector plate 415 to move rearward, and the pushing portion 415b at the rear end of the connector plate 415 pushes the left hand extremity 413c of the front side of the lever plate 413. This causes the lover plate 413 to pivot clockwise about the shaft 413b, and the pushing portion 413a of the lever plate 413 pushes on the rear part of the disc.

As a result, the disc projrcts out from the stocker 5.The projecting portion of the disc is gripped by the rollers 215 on the carrier 3, and the disc starts to be drawn onto the carrier 3. After that, when the pushing force on the connector plate 415 is released, the force of the twist coil spring 411 mounted with one end attached to the guide pin 414 and the other and attached to the left hand extremity 413c of the front side of the lever plate 413 causes the lever plate 413 to pivot couterclockwise. This causes the connector plate 415 to be pushed forward by the left hand extremity 413c of the front side of the lever plate 413 and return to its original position shown in FIG. 8. In the meantime, the holding plate 409 of the disc pull-in mechanism moves forward together with the disc when the disc is pushed forward by the lever plate 413, an when the disc is drawn out of the stocker 5 by the rotation of the rollers 215, the holding spring 410 leaves the engaging notch 205 in the disc and the disc pull-in mechanism returns to the state in which it is shown in FIG. 7.
With the disc pull-im mechanism described above, because the connector plate 415 is provided between the lever plate 413 and the actuator plate, not shown in the drawings, mounted on the carrier 3, it is not necessary for the actuator plate to be made long. And, because the amount of space needed to prevent vibrations from occurring when the carrier 3 is floating can therefore be reduced, the size of the unit can be reduced.

Next, the way in which the carrier 3, the player 4, and the stocker 5 inter-operate will be described in detail. When no disc recording or playback operation is being performed, and no disc is being inserted into or ejected from the unit, the carrier 3, the player 4, and the stocker 5 each standby in a predetermined position. In the description that follows, this state will be called the standby state. This state is determined by the positions of the elevator plates 12L and 12R.

First, the standby states of the carrier 3 and the stocker 5 will be described, with reference to FIG.3.

First, when the unit goes into the standby state, the elevator plates 12L and 12R are driven into the positions in which the holder pins 3A of the carrier 3 are positioned in #2a in the holder cams 12A, 12B, and 12C. This lines the carrier 3 up with the disc compartment 50b. And, because when the holder pins 3A are in #2a the stocker pins 5A are positioned in #D in the stocker cams 12D and 12E, the stocker is in its lower position. When the carrier 3 is in its standby state, the loading slot door 217 is locked by a lock mechanism not shown in the drawings.

When the user depresses the stock key 102 (FIG.4) in order to insert a disc, the elevator plates 12L and 12R move, the holder pins 3A of the carrier 3 move into #1a in the holder cams 12A, 12B, and 12C, and the carrier 3 moves into the position in which it is shown in FIG. 3, facing the disc compartment 50a of the stocker 5 and the loading slot 212. The stocker pins 5A are positioned in #D in the stocker cams 12D and 12E, and the stocker is therefore in its lower position.

Next, the standby position of the player 4 will be described, with reference to FIG. 17.

When the carrier 3 and the stocker 5 are in their standby positions, the player 4 is in its standby position also. At these times, the locking claws 20B, 20L, and 20R are engaged with the cutout portions 4A of the player 4 and are pressing down on the tapered portions of the cutout portions 4A, and the player has moved down into contact with the floor of the case 1 against the force of the dampers and the elastic force of the springs; the player is therefore in a floating-locked state.

Next, the operation of the elevator mechanism of the carrier 3 and the stocker 5 will be explained.

First, the operation in which the elevator mechanism lowers the carrier 3 will be described, with reference to FIGS. 9 through 14. When the carrier 3 is to be lowered, the drive motor 7 is actuated and the worm gear 8 rotates (FIG. 9), the transmission gear 9A rotates counterclockwise, the transmission gear 9B rotates clockwise, and the mechanism moves from the state shown in FIG. 9 to the state shown in FIG. 10.

Because the cam follower 13 mounted on the elevator drive link 10 projects into the cam groove 6b in the upper surface of the cam gear 6, as shown in FIG. 11, when the cam groove 6b rotates counterclockwise together with the cam gear 6 the cam follower 13 is moved clockwise and the elevator drive link 10 pivots clockwise also.

As a result, the engaging pin 10a mounted on the elevator drive link 10 pushes on the engaging hole 11a in the elevator drive plate 11, and the elevator drive plate 11 pivots clockwise as well. This causes the actuator pin 14L to move rearward and causes the actuator pin 14R to move forward. Therefore, the elevator plate 12L is pushed rearward by the actuator pin 14L and the elevator plate 12R is pushed forward by the actuator pin 14R. During this process, because the guide pins 1a slide in the guide slots 12a shown in FIG. 12 and FIG. 13, the elevator plates 12L and 12R move back and forth along the side plates 1L and 1R in straight lines and with a high degree of precision.

Because the holder cam 12A on the elevator plate 12L side is oriented with its front end low, as shown in FIG. 12, the rearward movement of the elevator plate 12L causes the holder pin 3A in the holder cam 12A to descend along the sub guide slot 22a in the sub guide plate 22L shown in FIG. 22. Meanwhile, because the holder cams 12B and 12C on the elevator plate 12R side are oriented with their rear ends low, as shown in FIG. 13, the forward movement of the elevator plate 12R causes the holder pins 3A in the holder cams 12B and 12C to descend along the sub guide slots 22a in the sub guide plate 22R shown in FIG. 24.

Therefore, the carrier 3 descends vertically; the holder pins 3A move into position in one of the levels #2a#4a in the holder cams 12A, 12B, and 12C, and the disc held in the carrier 3 is lowered into position facing the front opening of one of the disc compartments 50b-50d.

When the pin holders 3A arrive at one of the levels #1a-#4a and they are to stop at that level, the rotation of the cam gear 6 is stopped based on the output of the carrier position sensor, not shown in the drawings, mentioned above.

When the cam gear 6 has stopped rotating and the elevator plates 12L and 12R have stopped moving, the holder cams 12A, 12B, and 12C are holding the holder pins 3A in the vertical direction and the guide slots 1c in the side plates 1L and 1R, and the sub guide slots 22a in the sub guide plates 22L and 22R, are holding the holder pins 3A in the horizontal direction. In other words, the holder pins 3A are firmly held in both the vertical direction and the horizontal direction. Therefore, the holder pins 3A cannot be shaken out of position by vibrations from outside the case 1, and, because the carrier has the disc firmly under control, the disc can be reliably and stably loaded into the disc compartments 50a-50d by the rollers 215 on the carrier 3.

When the carrier 3 is to be raised, the drive motor 7 is actuated and the worm gear 8 rotates (FIG. 10 ), the transmission gear 9A rotates clockwise, the transmission gear 9B rotates counterclockwise, and the mechanism moves from the state shown in FIG. 10 to the state shown in FIG. 9. Because the cam follower 13 mounted on the elevator drive link 10 projects into the cam groove 6b in the upper surface of the cam gear 6, as shown in FIG. 11, when the cam groove 6b rotates clockwise together with the cam gear 6 the cam follower 13 moves counterclockwise and the elevator drive link 10 pivots counterclockwise also. As a result, the engaging pin 10a mounted on the elevator drive link 10 pushes on the engaging hole 11a in the elevator drive plate 11, and the elevator drive plate 11 pivots counterclockwise as well. This causes the actuator pin 14L to move forward and causes the actuator pin 14R to move rearward. Therefore, the elevator plate 12L is pushed forward by the actuator pin 14L and the elevator plate 12R is pushed rearward by the actuator pin 14R. During this process, because the guide pins 1a slide in the guide slots 12a, as shown in FIG. 12 and FIG. 13, the elevator plates 12L and 12R move back and forth along the side plates 1L and 1R in straight lines and with a high degree of precision.

Because the holder cam 12A on the elevator plate 12L side is oriented with its rearward end high, as shown in FIG. 12, the forward movement of the elevator plate 12L causes the holder pin 3A in the holder cam 12A to ascend along the guide slot 1c in the side plate 1L and the sub guide slot 22a in the sub guide plate 22L. Meanwhile, because the holder cams 12B and 12C on the elevator plate 12R side are oriented with their front ends high, as shown in FIG. 13, the rearward movement of the elevator plate 12R causes the holder pins 3A in the holder cams 12B and 12C to ascend along the guide slots 1c in the side plate 1R and the sub guide slots 22a in the sub guide plate 22R.

Because the carrier 3 whose elevator action is described above is supported by the three holder pins 3A at three points, one on the left side and two on the right side, the carrier 3 can be kept horizontal while it is being moved up and down.

Next, the operation by which discs are loaded into the stocker 5, which is carried out while the stocker 5 is in the higher of its two positions, will be explained, with reference to FIGS . 12, 13, and 16.

As shown in FIG. 16, when a disc is to be loaded into the disc compartment 50d in the stocker 5, the holder pins 3A of the carrier 3 descend into position in level #4a in the holder cams 12A, 12B, and 12C shown in FIGS. 12 and 13. At the same time, the stocker pins 5A ascend along the holding slots 1b from their positions in level #D in the stocker cams 12D and 12E up into level #U.

As a result, this ascent of the stocker 5 and the descent of the holder pins 3A into their position #4a bring the disc compartment 50d of the stocker 5 and the disc held in the carrier 3 face-to-face, as shown in FIG. 16.

Because the stocker 5 is supported by three pins, one stocker pin 5A on each of the left and right sides and the above-mentioned guide pin, not shown in the drawings, mounted at the rear of the stocker 5, like the carrier 3 the stocker 5 can be moved up and down while at the same time being kept horizontal. The stocker 5 can alternatively be provided with three or more pins at its sides, like the carrier 3, and raised and lowered by these pins.

Next, the operation by which the carrier 3 loads a disc onto the player 4 will be described, with reference to FIGS. 9-13, FIG. 22, FIG. 24, and FIG. 27.

When all the stocking completion sensors (51a-51d) mounted in the disc compartments 50a-50d in the stocker 5 have detected that there is a disc in their respective disc compartment, or when the instruction telling the unit to load a disc directly onto the player 4 without stocking it into the stocker 5 has been outputted, i.e. when the ^{~} key 107 has been pressed, and when then a disc has been inserted through the loading slot 212 into the carrier 3, or when the play key 8 and one of the No. keys (103-106) has been pressed and a disc has been ejected from the stocker 5 into the carrier 3 by the respective disc eject mechanism, the holder pins 3A move down to #S, the lowest step in the holder cams 12A, 12B, and 12C, and the carrier thus descends.

When the holder pins 3A are positioned in #S in the holder cams 12A, 12B, and 12C, the carrier is in contact with the player 4 and is in a position wherein it can be joined to the player 4.

It is noted in this connection that the surface of the player 4 onto which the disc is loaded is provided with a plug portion (not shown in the drawings), which is engagable with a socket portion (not shown in the drawings) which is provided in the underside of the disc, and the mating of these plug and socket portions when the carrier 3 is lowered onto the player 4 ensures that the disc held in the carrier 3 assumes the correct position on the player 4. Therefore, there is no particular need to accurately align the carrier 3 itself with the player 4; however, there is no reason why alignment of the carrier 3 with the player 4 should not also be carried out, by providing the carrier 3 and the player 4 with mutually engagable mating parts (for example consisting of a plug and a socket), in addition to this alignment of he disc itself with the player 4.

The carrier 3 holding the disc is then clamped onto the player 4 by the joining operation described below.

Note:
When the holder pins 3A are in position in #S, and when the rotation of the cam gear 6 has stopped and the movement of the elevator plates 12L and 12R has stopped, the holder pins 3A have overrun the guide slots 1c and are in the first large diameter holes 15A, 15B, and 15C, as shown in FIG. 12 and FIG. 13. Therefore, at this point, although the holder pins 3A are held in the vertical direction by the holder cams 12A, 12B, and 12C, they are not held in the horizontal direction by the guide slots 1c. However, at these times when the holder pins 3A are in #S and are not being held in the horizontal direction by the guide slots 1c, the sub guide plates 22L and 22R are in their higher positions, as shown in FIG. 22 and FIG. 24, and the sub guide slots 22a are holding the holder pins 3A in the horizontal direction. In other words, even when the holder pins 3A are in position in level #S in the holder cams 12A, 12B, and 12C, they are firmly held in both the vertical direction and the horizontal direction just as they are when in position in the levels #1a-#4a. Therefore, when the holder pins 3A are in #S, even if the carrier 3 is subject to vibrations from outside, the carrier 3 is prevented from slipping out of place and no damage is suffered by the disc.

Next, the floating mechanism operations by which the player 4 and the carrier 3 are joined will be described, with reference to FIGS. 16&27, FIGS. 9-14, and FIGS. 17-21.

When the disc placement completion sensor 216e mounted on the player 4 detects the carrier 3, the operation by which the player 4 and the carrier 3 are linked together commences. First, the forward movement of the floating mechanism lock plates 19LC and 19R will be described, with reference to FIGS . 17 and 18.

As the carrier 3 descends toward the player 4, the cam gear 6 is rotating counterclockwise, and the cam groove 6c on the underside of the cam gear 6 therefore is also rotating counterclockwise. As this cam groove 6c rotates counterclockwise, because the cam follower 18 moves rearward and the lock arm 17A pivots counteralockwise, the link pin 17a on the lock arm 17A moves rearward, and the engaging hole 17b moves forward. In other words, the mechanism moves from the state shown in FIG. 17 into the state shown in FIG. 18. As the link pin 17a on the lock arm 17A moves rearward, the link hole 17f, into which the link pin 17a projects, in the lock arm 17C, moves rearward, and the lock arm 17C pivots clockwise. As a result, the engaging hole 17g in the lock arm 17C moves forward, the link pin 19d which projects through the engaging hole 17g moves forward together with the engaging hole 17g, and the lock plate 19R moves forward together with the link pin 19d. And, on the other side of the mechanism, the forward movement of the engaging hole 17b in the lock plate 17A causes the link pin 19a which projects into the engaging hole 17b to move forward, and the lock plate 19LA moves forward together with the link pin 19a.

The forward movement of the link pin 19b mounted on the lock plate 19LA causes the link pin 19b to push the cutout portion 19f, and this pushing force on the cutout portion 19f causes the lock plate 19LB to pivot counterclockwise. As a result, the cutout portion 19g in the lock plate 19LB moves toward the right, this cutout portion 19g pushes the link pin 19h mounted on the lock plate 19LC to the right, and under this pushing action the lock plate 19LC moves toward the right together with the link pin 19h.

Next, the operations by which the floating mechanism chucking plates 25L and 25R are caused to pivot will be described, with reference to FIGS. 19-21.

As shown in FIGS. 19 and 20, while the lock plate 19LC is moving to the right, before the locking claw 20L completely disengages from the cutout portion 4A, the pusher 19i on the lock plate 19LC disengages from the pushing-point part 25b of the chucking plate 25L mounted on the player 4. As a result, the chucking plate 25L pivots counterclockwise under the elastic force of the chucking plate spring 26L, and the linking roller 25c engages with the V-notch 3D of the carrier 3, as shown in FIG. 20. When the linking roller 25c engages with the V-notch 3D, the player 4 is pulled toward the carrier 3.

And, as shown in FIG. 21, while the lock plate 19R is moving rearward, before the locking claw 20R completely disengages from the cutout portion 4A in the player 4, the locking claw 20R disengages from the pushing-point portion 25d of the chucking plate 25R mounted on the player 4. As a result, the chucking plate 25R pivots under the elastic force of the chucking plate spring 26R, and the linking claw 25e of the chucking plate 25R pushes down on the holder pin 3A, mounted on the right side edge of the carrier 3, from above.

The linking claw 25e mounted on the player 4 therefore pushes the holder pin 3A down, and the player is pulled toward the carrier 3. In this way, the player 4 and the carrier 3 are pulled toward each other and joined together. The elevator and linkage operations described above are driven by the cam gear 6, and the relationships between these operations can be predetermined by appropriate design of the shapes of the upper surface cam groove 6b and the underside cam groove 6c.

The locking claws 20L and 20R do not completely disengage from the cutout portion 4A of the player 4 until after the linkage of the carrier 3 with the player 4, brought about as described above by the pivoting movements of the chucking plates 25L and 25R, has been completed. Throughout the operation which links the carrier 3 to the player 4, the player 4 is kept in its standby state, i.e. in its locked state.

Next, the operation by which the carrier 3 and the player 4 thus joined together are detached from each other will be described, with reference to FIGS. 16 and 27, FIGS. 9-14, and FIGS. 17-21.

The drive motor 7 operates, and the cam gear 6 rotates clockwise ( FIG. 18). When this cam gear 6 rotates clockwise, the underside cam groove 6c in the cam gear 6 rotates clockwise also. The cam follower 18 moves forward, the lock arm 17A pivots clockwise, and the lock arm 17C pivots counterclockwise. As a result, the lock plates 19LA and 19R move rearward. In other words, the mechanism moves from the state shown in FIG. 18 into the state shown in FIG. 17.

The rearward movement of the lock plate 19LA causes the lock plate 19LB to pivot clockwise, and the clockwise movement of the lock plate 19LB causes the lock plate 19LC to move toward the left. This causes the pusher portion 19i of the lock plate 19LC to push the pushing-point part 25b of the chucking plate 25L. As a result, the chucking plate 25L pivots clockwise against the elastic force of the chucking plate spring 26L, and the link roller 25c disengages from the V-notch 3D of the carrier 3. And, on the other side of the mechanism, as the lock plate 19R moves rearward, the locking claw 20R pushes on the pushing-point portion 25d of the chucking plate 25R. This causes the chucking plate 25R to pivot against the elastic force of the chucking plate spring 26R, and the linking claw 25e disengages from the holder pin 3A mounted on the right side edge of the carrier 3. These operations detach the carrier 3 from the player 4.

Next, the floating mechanism operations which lock and release the player 4 will be described, with reference to FIG. 27 and FIGS. 17-25.

After the carrier 3 has been joined to the player 4 (FIGS. 19-21), the player 4 floating lock is released, the carrier 3 and the player 4 go into the floating state, and the slide shutter 204 of the disc held in the carrier 3 is opened by suitable means to allow the disc to be accessed. Note:
Opening of the slide shutter 204 may alternatively be carried out after the disc is loaded into the carrier 3.
First, the operation which releases the player 4 lock will be described.
When, after the carrier 3 and the player 4 have joined together, the cam gear 6 continues to rotate counterclockwise, the floating mechanism of this preferred embodiment releases the player 4 floating lock in the following way.

The cam follower 1% shown in FIG. 17 is moved further rearward by the rotation of the underside cam groove 6c in the cam gear 6, the lock arm 17A moves counterclockwise, the lock arm 17C moves clockwise, and the lock plates 19LA and 19LR both move forward. The forward movement of the lock plate 19R causes the locking claw 20R mounted on the lock plate 19R to disengage from the cutout portion 4A in the player 4, and the mechanism moves from the state shown in FIG. 17 into the state shown in FIG. 18.

And, on the other side of the mechanism, the forward movement of the lock plate 19LA causes the lock plate 19LB to pivot counterclockwise. The lock plate 19LC connected to the lock plate 19LB moves to the right, and the locking claw 20L mounted on the lock plate 19LC disengages from the cutout portion 4A of the player 4.

When the lock arm 17A pivots counterclockwise, the cam hole 17d in the lock arm 17A moves forward, and this causes the lock arm 17B which engages with the cam hole 17d to pivot counterclockwise. As a result, the locking claw 20B mounted on the lock arm 17B disengages from the cutout portion 4A of the player 4, i.e. the mechanism moves from the state shown in FIG. 17 into the state shown in FIG. 18.

Therefore, in the player 4 lock release operation described above, the player 4 is released from its locked state by the locking claw 20L of the lock plate 19LC, the locking claw 20R of the lock plate 19R, and the locking claw 20B of the lock arm 17B all disengaging from the cutout portions 4A of the player 4. And if, simultaneously with this operation, the holder pins 3A are also rendered free to move, as described hereinafter, the carrier 3 and the player 4 are left floating on the dampers and anti-vibration springs (not shown in the drawings) mentioned above.

Next, the operations which are carried out when the first large diameter holes 15A, 15B, and 15C formed in the side plates 1L and 1R are aligned with the second large diameter holes 16A, 16B, and 16C formed in the elevator plates 12L and 12R will be described.

After the player 4 lock release operation described above has been completed, as the cam gear 6 continues to rotate still further clockwise, the rotation of the cam groove 6b causes the elevator plate 12L to move rearward, and causes the elevator 12R to move forward. The first large diameter holes 15A, 15B, and 15C then become aligned with the second large diameter holes 16A, 16B, and 16C, as shown in FIGS. 12 and 13. As this happens, the holder pins 3A move from the position #S into the position #P.
Next, the operation in which the elevator mechanisms of the side plates 22L and 22R lower the side plates 22L and 22R will be described, with reference to FIGS. 22-25.

As shown in FIG. 18, the rotation of the underside cam groove 6c in the cam gear 6 causes the lock plates 19LA and 19R to move forward, and, as shown in FIGS. 22&24, the pusher pins 19c and 19e of the lock plates 19LA and 19R push the pushing-point portions 21b of the sub guide links 21L and 21R rearward. As a result, the free ends of the sub guide links 21L and 21R pivot downward, as shown in FIGS . 23&25, and the holding portions 21a formed at the free ends of the sub guide links 21L and 21R push down the engaging pins 22b. As a result, the sub guide plates 22L and 22R descend against the elastic force of the sub guide plate springs 23L and 23R.

This brings the third large diameter holes 24A, 24B, and 24C formed in the sub guide plates 22L and 22R into alignment with the first large diameter holes 15A, 15B, and 15C formed in the side plates 1L and 1R. In other words, the first large diameter holes, the second large diameter holes, and the third large diameter holes are now all in alignment.

Because the holder pins 3A are positioned in the large diameter holes aligned as described above, each of the holder pins is free to move around within the large diameter holes which it passes. And, because at this point the carrier 3 is joined to the player 4, the carrier 3 and the player 4 become free to float. It is noted in this connection that because, as shown in FIG. 14, each of the holder pins 3A is provided with a larger diameter portion at each of its ends, and these larger diameter portions are tapered, when the floating state is locked again the holder pins 3A can move into the slots continuous with the large diameter holes smoothly and without getting snagged. Preferably, these larger diameter end portions should be of larger diameter than the large diameter holes, so that the holder pins are certain of moving to the slots.

Next, the operation by which the player is locked in its floating state will be described, with reference to FIGS.17 and 18.

As the cam gear 6 is rotated clockwise by the drive motor 7, the underside cam groove 6c of the cam gear 6 also rotates clockwise. This causes the cam follower 18 to move forward, and the lock arm 17A pivots clockwise and the lock arm 17B pivots counterclockwise. AS a result, the lock plates 19LA and 19R move rearward, and the lock plate 19LC moves to the right. In other words, the mechanism moves from the state shown in FIG. 18 into the state shown in FIG. 17. The rearward movement of the lock plate 19R causes the locking claw 20R to move into the cutout portion 4A of the player 4.

The clockwise pivoting of the lock arm 17A causes the lock arm 17B to pivot clockwise, and the locking claw 20B moves into the cutout portion 4A in the player 4. And the movement of the lock plate 19LC toward the left causes the locking claw 20L to move into the cutout portion 4A also. Thus, in this player 4 locking operation, the player 4 is put into its locked state by the locking claw 20L of the lock plate 19LC, the locking claw 20R of the lock plate 19R, and the locking claw 20B of the lock arm 17B all entering the cutout portions 4A of the player 4. The locking claws 20B, 20L, and 20R push down on the tapered portions of the cutout portions 4A, and push the player 4 down into contact with the floor of the case 1.

Next, the operation by which the elevator mechanism of the sub guide plates 22L and 22R lifts up the sub guide plates 22L and 22R will be explained, with reference to FIGS. 22-25.

As shown in FIG. 18, the cam is rotated clockwise by the drive motor 7, the underside cam groove 6c of the cam gear 6 rotates clockwise, the cam follower 18 moves forward, the lock arm 17A pivots clockwise, and the lock arm 17C pivots counterclockwise. This causes the lock plates 19LA and 19R to move rearward.

As a result, the pusher pins 19c and 19e of the lock plates 19LA and 19R disengage from the pushing-point portions 21b of the sub guide links 21L and 21R. This causes the sub guide plates 22L and 22R to ascend under the elastic force of the sub guide plate springs 23L and 23R, and the free ends of the sub guide links 21L and 21R pivot upward also.

As described above, in an MD unit according to this preferred embodiment of the present invention, the rotation of the upper surface cam groove 6b of the cam gear 6 can be used to control one operation, i.e. the raising and lowering of the carrier 3 and the stocker 5, and both the rotation of the upper surface cam groove 6b and the rotation of the underside cam groove 6c can be used to control two other operations, i.e. the linking and separation of the carrier 3 and the player 4 and the locking and unlocking of the player 4.

It should be noted that although in the preferred embodiment described above the carrier 3 and the player 4 are separate constructions, it is possible for the player 4 to be combined with the carrier 3 into one integrated construction, and, when this kind of configuration is adopted, because the player moves in the Y1 and Y2 directions of FIG. 3, a disc loaded onto the carrier 3 can be rotated quickly.

Also, in the preferred embodiment described above, because an MD was used as the recording medium, it was an example of the application of the invention to an MD unit that was described; however, by making the recording medium a different optical recording medium such as a CD or a video disc, or a magnetic recording medium such as a floppy disc, the invention can of course be similarly applied to a device for handling these recording media.

In the above description the movements of the elevator plates 12L and 12R cause the holder pins 3A mounted on the carrier 3 to move into one of the levels #1a to #4a in the holder cams 12A, 12B, and 12C, and by this movement the positioning of the carrier 3 relative to the stocker 5 (referred to below as the 1st positioning operation) is performed; and the holder pins 3A then move from the level #4a into the level #S, and by this movement the positioning of the carrier 3 relative to the player 4 (referred to below as the 2nd positioning operation) is performed. That is, the 1st and 2nd positioning operations are performed successively by the movement of the elevator plates 12L and 12R. By means of this design, the construction of the MD unit is simplified.

However, this invention is not limited to this preferred embodiment, and the 1st positioning operation and the 2nd positioning operation may alternatively be controlled separately from each other and by separate means. And, when this is done, the means for performing the 2nd positioning operation may perform the positioning of the carrier 3 relative to the player 4 by moving the carrier 3 and the player 4 in opposite directions to each other.

## Claims

1. A floating mechanism for a disc device (3, 4), which comprises:
a device which is to be put into a floating state, and which includes disc recording/playback means;
a plurality of projecting members (3a), which project from the device;
**characterized in that** it further comprises:
side plates (1L, 1R) provided with guide slots (1c) for guiding the device up and down in a straight line, the projecting members (3a) projecting into the guide slots;
elevator plates (12L, 12R), provided with stepped cams (12A, 12B, 12C) which move the device (3) up and down when caused to do so by the movement of the elevator plate, the projecting members (3a) projecting into the stepped cams (12B, 12C);
said guide slots (1c) being provided with first large diameter holes (15A, 15B, 15C) located where the projecting members (3a) are to be when said device (3) is put into the floating state;
said stepped cams (12A, 12B, 12C) being provided with second large diameter holes (16A, 16B, 16C) which when caused to do so by the movement of the elevator plates (12L, 12R) become substantially aligned with said first large diameter holes (15A, 15B, 15C) respectively;
sub guide plates (22L, 22R), each mounted adjacent to at least one of said elevator plates (12L, 12R);
said sub guide plates being provided with supplementary guide slots which serve in place of the parts of the guide slots (12A) that are rendered missing by the presence of said first large diameter holes (15A, 15B, 15C), the projecting portions (3a) projecting into the supplementary guide slots, and the sub guide plates (22L, 22R) being provided with third large diameter holes (24A, 24B, 24C), one third large diameter hole being formed at one end of each of the supplementary guide slots;
wherein the floating state of the device (3) is secured by the rough alignment of said first, second and third large diameter guide holes.

2. A floating mechanism according to clam 1, in which the projecting members (3a) are provided at both ends with large diameter end portions having tapered side surfaces, for preventing the projecting members from leaving said guide slots (1c), said stepped cams (12A, 12B, 12C) and said supplementary guide slots.

3. A floating mechanism according to claim 2, in which the large diameter end portions are of larger diameter than said first, second and third large diameter holes.

4. A floating mechanism according to claim 1, further comprising moving means for moving said sub guide plates (22L, 22R), wherein the third large diameter holes (24A, 24B, 24C) are aligned with said first and second large diameter holes by the moving means.

5. A floating mechanism according to claim 1, in which the device (3) to be put into a floating state includes a disc holder containing a disc and also is provided with linking means for linking the disc holder to the means for disc recording/playback.

## Patentansprüche

1. Schwebender Mechanismus für eine Plattenvorrichtung (3, 4) bestehend aus:
einer Vorrichtung, die in einen schwebenden Zustand gebracht wird und die Plattenaufzeichnungs und -abspielmittel besitzt;
einer Mehrzahl vorspringender Elemente (3a), die von der Vorrichtung vorspringen;
**dadurch gekennzeichnet, dass** sie weiter besteht aus:
Seitenplatten (1L, 1R), die mit Führungsschlitzen (1c) versehen sind, um die Vorrichtung in einer geraden Linie auf- und abzuführen, wobei die vorspringenden Elemente (3a) in die Führungsschlitze ragen;
Hebeplatten (12L, 12R), die mit gestuften Kulissen (12A, 12B, 12C) versehen sind und die Vorrichtung (3) auf- und abbewegen, wenn sie durch die Bewegung der Hebeplatte dazu veranlasst werden, wobei die vorspringenden Elemente (3a) in die gestuften Kulissen (12B, 12C) ragen;
wobei die Führungsschlitze (1c) mit ersten Löchern (15A, 15B, 15C) mit großem Durchmesser versehen sind, die dort angeordnet sind, wo die vorspringenden Elemente (3a) sein sollen, wenn die Vorrichtung (3) in den schwebenden Zustand gebracht ist;
wobei die gestuften Kulissen (12A, 12B, 12C) mit zweiten Löchern (16A, 16B, 16C) versehen sind, die, wenn sie durch die Bewegung der Hebeplatten (12L, 12R) dazu veranlasst werden, im Wesentlichen mit den ersten Löchern (15, 15B, 15C) in Ausrichtung kommen;
Nebenführungsplatten (22L, 22R), die jeweils neben wenigstens einer der Hebeplatten (12L, 12R) angeordnet sind;
wobei die Nebenführungsplatten mit ergänzenden Führungsschlitzen versehen sind, die anstelle der Teile der Führungsschlitze (12A) dienen, die durch das Vorhandensein der ersten Löcher (15A, 15B, 15C) weggelassen sind, wobei sich die vorspringenden Elemente (3a) in die ergänzenden Führungsschlitze erstrecken und die Nebenführungsplatten (22L, 22R) mit n Löchern (24A, 24B, 24C) mit großem Durchmesser versehen sind, wobei ein drittes Loch mit großem Durchmesser an einem Ende von jedem ergänzenden Führungsschlitz gebildet ist;
wobei der schwebende Zustand der Vorrichtung (3) durch die grobe Ausrichtung der ersten zweiten und dritten Löcher mit großem Durchmesser sichergestellt wird.

2. Schwebender Mechanismus nach Anspruch 1, bei dem die vorspringenden Elemente (3a) an beiden Enden mit Endabschnitten mit großem Durchmesser versehen sind, die konische Seitenflächen besitzen, um zu verhindern, dass die vorspringenden Elemente aus den Führungsschlitzen (1c), den gestuften Kulissen (12A, 12B, 12C) und den ergänzenden Führungsschlitzen treten.

3. Schwebender Mechanismus nach Anspruch 2, wobei die Endabschnitte mit großem Durchmesser größer sind, als der der ersten, zweiten und dritten Löcher mit großem Durchmesser.

4. Schwebender Mechanismus nach Anspruch 1, außerdem bestehend aus Bewegungsmitteln zum Bewegen der Nebenführungsplatten (22L, 22R), wobei die dritten Löcher (24A, 24B, 24C) mit großem Durchmesser durch die Bewegungsmittel mit den ersten und zweiten Löchern mit großem Durchmesser ausgerichtet werden.

5. Schwebender Mechanismus nach Anspruch 1, wobei die Vorrichtung (3), die in einen schwebenden Zustand gebracht werden soll, einen Plattenhalter besitzt, der eine Platte enthält und außerdem mit Verbindungsmitteln versehen ist, die den Plattenhalter mit den Mitteln für das Plattenaufnehmen und -abspielen verbinden.

## Revendications

1. Mécanisme flottant pour dispositif (3, 4) à disque, qui comporte :
un dispositif destiné à être mis à un état flottant et qui comporte un dispositif d'enregistrement-lecture sur disque, et
plusieurs organes en saillie (3a) qui dépassent du dispositif,
**caractérisé en ce qu'**il comporte en outre
des plaques latérales (1L, 1R) ayant des fentes de guidage (1c) destinées à guider le dispositif en direction verticale en ligne droite, les organes en saillie (3a) dépassant dans les fentes de guidage,
des plaques élévatrices (12L, 12R) munies de cames étagées (12A, 12B, 12C) qui déplacent le dispositif (3) en direction verticale lorsqu'elles sont ainsi commandées par le déplacement de la plaque élévatrice, les organes en saillie (3a) dépassant dans les cames étagées (12B, 12C),
les fentes de guidage (1c) ayant des premiers trous (15A, 15B, 15C) de grand diamètre disposés à l'endroit où les organes en saillie (3a) doivent se trouver lorsque le dispositif (3) est mis à l'état flottant,
les cames étagées (12A, 12B, 12C) ayant des seconds trous (16A, 16B, 16C) de grand diamètre qui, lorsqu'ils sont ainsi commandés par le déplacement des plaques élévatrices (12L, 12R), viennent pratiquement'aligner sur les premiers trous (15A, 15B, 15C) de grand diamètre respectivement, et
des plaques auxiliaires de guidage (22L, 22R) montées chacune près de l'une au moins des plaques élévatrices (12L, 12R),
les plaques auxiliaires de guidage ayant des fentes supplémentaires de guidage qui sont utilisées à la place des parties de fente de guidage (12A) qui sont rendues manquantes par la présence des premiers trous (15A, 15B, 15C) de grand diamètre, des parties en saillie (3a) dépassant dans les fentes supplémentaires de guidage, et les plaques auxiliaires de guidage (22L, 22R) ayant des troisièmes trous (24A, 24B, 24C) de grand diamètre, un troisième trou de grand diamètre étant formé à une première extrémité de chacune des fentes supplémentaires de guidage,
dans lequel l'état flottant du dispositif (3) est obtenu par alignement grossier des premiers, seconds et troisièmes trous de guidage de grand diamètre.

2. Mécanisme flottant selon la revendication 1, dans lequel les organes en saillie (3a) comportent, aux deux extrémités, des parties d'extrémité de grand diamètre ayant des surfaces latérales inclinées, destinées à empêcher les organes en saillie de quitter les fentes de guidage (1c), les cames étagées (12A, 12B, 12C) et les fentes supplémentaires de guidage.

3. Mécanisme flottant selon la revendication 2, dans lequel les parties d'extrémité de grand diamètre ont un diamètre supérieur à celui des premiers, seconds et troisièmes trous de grand diamètre.

4. Mécanisme flottant selon la revendication 1, comprenant en outre un dispositif de déplacement des plaques auxiliaires de guidage (22L, 22R), et les troisièmes trous (24A, 24B, 24C) de grand diamètre sont alignés sur les premiers et seconds trous de grand diamètre par le dispositif de déplacement.

5. Mécanisme flottant selon la revendication 1, dans lequel le dispositif (3) destiné à être mis à un état flottant comporte un support de disque qui contient un disque et qui a aussi un dispositif de liaison destiné à relier le support de disque au dispositif d'enregistrement-lecture de disque.
